# EUROPEAN PATENT APPLICATION

(11) **EP 2 924 670 A1**
(43) Date of publication of application: **30.09.2015**
(21) Application number: 15000911.6
(22) Date of filing: 27.03.2015
(51) Int. Cl.: G08C 25/00, H04Q 9/00, G01D 1/18

(54) **INFORMATION PROCESSING APPARATUS, INFORMATION PROCESSING METHOD, INFORMATION SYSTEM AND PROGRAM**

(30) Priority: 28.03.2014 JP 2014070090
(71) Applicant: Hitachi High-Technologies Corporation, Tokyo 105-8717 (JP)
(72) Inventor: Masuda, Toshio, Tokyo, 105-8717 (JP); Nakayama, Yoshiyuki, Tokyo (JP); Suzuki, Tadashi, Hitachi-shi, Ibaraki (JP); Noda, Tojiro, Hitachi-shi, Ibaraki (JP)
(74) Representative: Strehl Schübel-Hopf & Partner

(57) **Abstract**

The information processing apparatus includes a receiving unit for receiving from a transmission-side information processing apparatus data extracted from a set of data of a plurality of attributes acquired in time series from a monitoring target and a reception data processing unit for setting, when a set of the received data includes a value-unfilled attribute, a value being latest among known values of the attribute included in previously received time-series sets of data, as a value of the value-unfilled attribute.

## Description

### FIELD

The present invention relates to an information processing apparatus to transfer and receive information to and from other apparatuses.

### BACKGROUND

An information system is operated, which monitors an apparatus by analyzing data detected by sensors, etc. mounted on a variety of apparatuses and control data of these apparatuses. This type of information system is exemplified by a system configured to include; a transmission-side information processing apparatus connected to, e.g., the variety of apparatuses and the sensors; and a reception-side information processing apparatus to execute analyzing the data. The transmission-side information processing apparatus transfers the data via, e.g., a network, etc. to the reception-side information processing apparatus. Then, the reception-side information processing apparatus accumulates the data to be transferred, and executes an analysis process or a diagnosis process of the accumulated data. A process exemplified by the analysis process or the diagnosis process will hereinafter be called a monitoring diagnosis algorithm.

For reducing a load on the network, or for reducing a load on a database apparatus or for reducing a capacity, this type of information system adopts such a method as the case may be that the data are transferred when a variation occurs in detected data but not transferred when no variation occurs. For example, the transmission-side information processing apparatus acquires the data detected as time-series data containing the data of a period for which the data do not vary. However, the transmission-side information processing apparatus transfers the data when the variation occurs in the detected data. Whereas when no variation occurs in the detected data, the transmission-side information processing apparatus does not transmit the data.

On the other hand, the reception-side information processing apparatus to execute the monitoring diagnosis algorithm requests, as the case may be, not the data when the variation occurs but the time-series data containing the data of a period for which the data do not vary as processing target data. Accordingly, in order for the reception-side information processing apparatus to execute the monitoring diagnosis algorithm, at first, it is required that the data accumulated when the variation occurs are converted into the time-series data in some cases.

### CITATION LIST

### PATENT LITERATURE

[Patent Literature 1] Japanese Patent Application Laid-Open Publication No.H03-226023
[Patent Literature 2] Japanese Patent Application Laid-Open Publication No.2001-168948

### SUMMARY

On the occasion of adopting the method of extracting the data given when the variation occurs, however, the data for applying the monitoring diagnosis algorithm are insufficient in terms of a data quality such as accuracy or reliability of the data in some cases. For instance, this method affects a result of executing the monitoring diagnosis algorithm in a way that depends on fineness of reference values for determining whether a variation occurs in time-series or not in some cases. Further, e.g., the data, to which the monitoring diagnosis algorithm is applied, are missed in a way that depends of reliability of a communication method for transmitting and receiving the data as the case may be. On the other hand, when adopting a method of performing a complicated compression process for the time-series data to be transmitted, there increase a load on the transmission-side information processing apparatus to execute the compression process and a load on the reception-side information processing apparatus to decompress the compressed data.

It is an object of the present invention to improve a data quality such as accuracy or reliability of time-series data to be processed on a reception side to a greater degree than by the prior arts in the way of restraining a load on a transmission side or a reception side.

According to an aspect of the embodiments, a transmission-side information processing apparatus is illustrated. The information processing apparatus includes a receiving unit for receiving from a transmission-side information processing apparatus data extracted from a set of data of a plurality of attributes acquired in time series from a monitoring target and a reception data processing unit for setting, when a set of the received data includes a value-unfilled attribute, a value being latest among known values of the attribute included in previously received time-series sets of data, as a value of the value-unfilled attribute.

According to another aspect of the embodiments, a reception-side information processing apparatus is illustrated. The information processing apparatus includes: an acquiring unit for acquiring in time series, a set of data of a plurality of attributes from a monitoring target; an extraction unit for extracting, when the extraction unit determines according to a determination mode that the acquired set of data includes a change, the changed data from the set of data, the extraction unit changing the determination mode in accordance with a status of the monitoring target; and a transmitting unit for transmitting the extracted data to a reception side information processing apparatus.

According to yet another aspect of the embodiments, an information system is illustrated. The information system includes the transmission-side information processing apparatus and the reception-side information processing apparatus.

According to these aspects of the invention, a data quality such as accuracy or reliability of time-series data to be processed on a reception side is improved to a greater degree than by the prior arts in the way of restraining a load on a transmission side or a reception side.

### BRIEF DESCRIPTION OF DRAWINGS

FIG. 1 is a diagram illustrating a configuration of an information system;
FIG. 2 is a diagram illustrating a hardware configuration of a computer;
FIG. 3 is a diagram illustrating a data structure of a detection data table;
FIG. 4A is a diagram illustrating a sample of reception data;
FIG. 4B is a diagram illustrating a sample of the reception data after setting an arrival sequence;
FIG. 4C is a diagram of a data example in which to execute a process of filling most updated known values in blank columns of the reception data table;
FIG. 5 is a diagram illustrating a structure of a threshold value table A;
FIG. 6 is a diagram illustrating a structure of a threshold value table B;
FIG. 7 is a diagram illustrating a structure of a time interval allowable value table A;
FIG. 8 is a diagram illustrating a structure of a time interval allowable value table B;
FIG. 9 is a flowchart illustrating a control flow of a monitoring target apparatus;
FIG. 10 is a flowchart illustrating a threshold value/allowable value setting process.
FIG. 11 is a flowchart illustrating a transmission data generating process;
FIG. 12 is a flowchart illustrating details of a process of referring to a threshold value of a variation of a value;
FIG. 13 is a flowchart illustrating details of a process of referring to a detection time interval allowable value;
FIG. 14 is a flowchart illustrating a reception data process;
FIG. 15 is a flowchart illustrating details of a data filling process;
FIG. 16 is a flowchart illustrating details of a filter process;
FIG. 17 is a flowchart illustrating details of an equal interval process;
FIG. 18 is a flowchart illustrating a threshold value setting process in an Example 2;
FIG. 19 is a flowchart illustrating a transmission data generating process of the information system in the Example 2;
FIG. 20 is a diagram illustrating a configuration of the information system in an Example 3;
FIG. 21 is a flowchart illustrating a transmission data variation setting process in the Example 3;
FIG. 22 is a flowchart illustrating a reception data restoring process in the Example 3;
FIG. 23 is a diagram illustrating a graph in which to visualize the reception data;
FIG. 24 is a diagram illustrating a graph in which to visualize the reception data undergoing a process of filling most updated known values in blank columns.

### DESCRIPTION OF EMBODIMENT(S)

An information system according to one embodiment of the present invention will hereinafter be described with reference to the drawings. The following embodiment is an exemplification, however, it does not mean that the present information system is limited to a configuration of the embodiment.

### [Example 1]

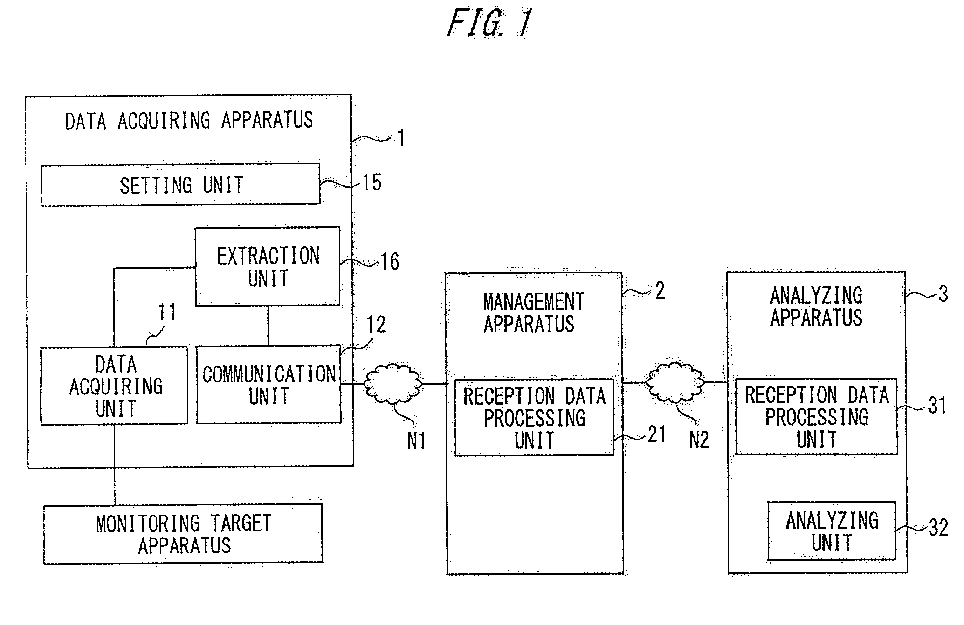

The information system according to an Example 1 will be described with reference to FIGS. 1 through 17.

### <Configuration>

FIG. 1 is a diagram illustrating a configuration of the information system. The information system includes a data acquiring apparatus 1, a management apparatus 2 and an analyzing apparatus 3. As in FIG. 1, the data acquiring apparatus 1 and the management apparatus 2 are interconnected via a network N1. Further, the management apparatus 2 and the analyzing apparatus 3 are interconnected via a network N2.

It does not mean that there are limits to the networks N1, N2 in the information system. The networks N1, N2 may be configured to be a single network and may also be configured to be different types of networks being connected via the management apparatus 2 or a router, etc. The networks N1, N2 may be configured to be public networks such as the Internet and may also be configured to be private networks within specified organizations. Moreover, the networks N1, N2 may be configured to be wireless networks or cable networks, or alternatively a hybrid network including both of the wireless network and the cable network.

Moreover, as in FIG. 1, the data acquiring apparatus 1 is connected to a monitoring target apparatus. It does not mean that there is a limit to the connection between the data acquiring apparatus 1 and the monitoring target apparatus. The data acquiring apparatus 1 and the monitoring target apparatus are interconnected via a network such as a LAN (Local Area Network) and a wireless LAN or via another common communication interface. In other words, it may be sufficient that the communication interface of the monitoring target apparatus is capable of establishing the connection with the data acquiring apparatus 1. For example, this communication interface may be an analog interface and may also be a digital interface. Further, the communication interface may be a serial interface and may also be a parallel interface. Furthermore, the monitoring target apparatus may be wirelessly connected to the data acquiring apparatus 1. Note that the data acquiring apparatus 1 and the monitoring target apparatus may be interconnected via the networks N1, N2, etc.

The monitoring target apparatus is an apparatus becoming the monitoring target of the information system. In the Example 1, it does not mean that there is a limit to the type of the monitoring target apparatus. The monitoring target apparatus can be exemplified such as equipment within an industrial manufacturing plant, a manufacturing apparatus, a computer within an information communication system or a broadcasting system, a communication apparatus within the information communication system or the broadcasting system, a power generating plant, a device of an electricity delivery system, a vehicle within a traffic system of a transportation entrepreneur for railway, etc., a management communication apparatus within the traffic system, a computer in an online system, a communication apparatus in the online system, a research instrument or a physical-and-chemical instrument in a research institution, a school, etc., a computer in the research institution, a computer, etc. of an organization such as en enterprise or a government office, etc., an inspection apparatus, a diagnosis apparatus and a therapeutic apparatus in a hospital, etc. The monitoring target apparatus includes, e.g., a variety of sensors and hands over data to the data acquiring apparatus 1 via the communication interface, the data being detection data detected by the sensors or data for controlling the respective units of the monitoring target apparatus. The "detection data" detected by the sensors or the "data" for controlling the respective units of the monitoring target apparatus, will hereinafter be simply termed the "detection data".

The data acquiring apparatus 1 includes a data acquiring unit 11, a communication unit 12, a setting unit 15 and an extraction unit 16. The data acquiring unit 11 acquires the detection data that is output via the communication interface of the monitoring target apparatus, and saves the acquired detection data in, e.g., a main storage device. An area of the main storage device to be saved with the detection data is called a "detection data table". The data acquiring unit 11 may also be configured to acquire the detection data from the monitoring target apparatus at, e.g., a predetermined time interval or at predetermined time. However, the data acquiring unit 11 may further be configured to acquire the detection data from an interface of the monitoring target apparatus in response to a predetermined trigger signal, e.g., notification given from the monitoring target apparatus, notification given from the management apparatus 2, and so on. The data acquiring unit 11 saves, in the main storage device, values of the detection data together with the detection time of the detection data and attribute IDs such as sensor IDs defined as identification information of the sensors detecting the detection data. Accordingly, the detection data saved in the main storage device are time-series data acquired at the predetermined time interval. Note that information indicating a type of the detection data is called an attribute in the following Examples 1 and 2. Further, the following discussion will be made on the assumption that the information system uses the attribute ID as the information indicating the attribute. Each of the sensor ID to specify the sensor detecting the data, a sensor name, an ID that specifies a type of control data, a type name of the control data, etc. can be exemplified by way of one example of the attribute ID. Moreover, the attribute specified by the attribute ID, i.e., the type of the data being handled by the information system may be exemplified by an operation mode of the apparatus, a deviation from a target value, and so forth.

The extraction unit 16 reads the detection data acquired by the data acquiring unit 11 from the main storage device, and extracts the data to be handed over to the communication unit 12. The communication unit 12 transmits the data handed over from the extraction unit 16 to the management apparatus 2. In the following Examples inclusive of the Example 1, the extraction unit 16 extracts the detection data with a variation in value with respect to the detection data acquired last time in the time-series detection data acquired by the data acquiring unit 11. Hence, even when the data acquiring unit 11 acquires the detection data in time-series at the predetermined time interval for the detection, it does not mean that all of the detection data are transmitted to the management apparatus 2.

The setting unit 15 sets, based on, e.g., a user's operation, a threshold value used for the extraction unit 16 to determine whether the variation in value occurs with respect to the detection data acquired last time. Further, the setting unit 15 sets an allowable value corresponding to the time interval for detecting the data to be extracted by the extraction unit 16. Accordingly, the extraction unit 16 extracts the data to be transmitted by the communication unit 12 to the management apparatus 2 in a way that refers to the threshold value set by the setting unit 15 or an allowable value of a time interval for the transmission.

The data acquiring apparatus 1 is one example of an information processing apparatus and a transmission-side information processing apparatus. Further, the data acquiring unit 11 is one example of an acquiring unit. The communication unit 12 is one example of a transmitting unit.

Each of the management apparatus 2 and the analyzing apparatus 3 is, similarly to the data acquiring apparatus 1, a computer including, e.g., the main storage device and the CPU (Central Processing Unit). Each of the management apparatus 2 and the analyzing apparatus 3 executes a variety of processes for the detection data transmitted from the data acquiring apparatus 1 in accordance with a computer program deployed in an executable manner on, e.g., the main storage device. Moreover, the management apparatus 2 provides a user with a result of processing the detection data. In the example of FIG. 1, the analyzing apparatus 3 provides, in cooperation with the management apparatus 2, an analysis service for processing the detection data. However, a function of the analyzing apparatus 3 may be incorporated into the management apparatus 2. In other words, all of processes to be described in the following Examples may be performed by the management apparatus 2. Moreover, the processes to be described in the Examples may also be executed in distribution by the management apparatus 2, the analyzing apparatus 3, a plurality of computers including other computers, and other apparatuses.

The management apparatus 2 includes a reception data processing unit 21. The reception data processing unit 21 attaches serial numbers, in the arrival sequence of the reception data, to the reception data received from the data acquiring apparatus 1. This serial number is to be called an arrival sequence.

The analyzing apparatus 3 includes a reception data processing unit 31 and an analyzing unit 32. The analyzing unit 32 executes a monitoring diagnosis algorithm for the detection data saved in the management apparatus 2. The monitoring diagnosis algorithm functions so as to input the time-series data containing the detection time and the value and output an analysis result. The monitoring diagnosis algorithm includes a variable time input-enabled algorithm capable of inputting the analysis target data at a variable time interval for the detection and an equi-time input-enabled algorithm capable of inputting the analysis target data at a fixed time interval for the detection.

The reception data processing unit 31 compares the detection data saved in the management apparatus 2 with the detection data detected last time and, when being the data extracted upon the variation in value, changes the data into the time-series data. The time-series data connotes a series of data containing the data detection time and one set of detection values acquired from the monitoring target apparatus, the detection time and the value data being organized as a tuple. Accordingly, e.g., the time-series data include, as the data, one set of detection values containing detection values of the sensors with the values not being varied even when there is no variation in detection value of a specified sensor of the monitoring target apparatus but when the values of other sensors vary. An interval of the detection time is not necessarily, however, fixed in the consecutive time-series data.

Further, the reception data processing unit 31 excludes data not conforming to a predetermined condition from the detection data saved in the management apparatus 2, and processes the reception data into data that can be highly accurately analyzed by the analyzing unit 32. Moreover, the reception data processing unit 31, when the monitoring diagnosis algorithm to be executed is the equi-time input-enabled algorithm and when the detection time of the detection data saved in the management apparatus 2 is not fixed, changes the detection data into the time-series data of the equi-time interval.

Note that the discussion on the embodiment ranging from the Example 1 to the Example 3 which follow, is based on the assumption that the reception data processing unit 31 of the analyzing apparatus 3 changes the reception data into the time-series data. It does not, however, mean that the processes of the information system are limited to such a procedure. For example, the reception data processing unit 21 of the management apparatus 2 may execute a process of changing the reception data into the time-series data, a process of excluding the data not conforming to the predetermined condition and processing the reception data into the data that can be highly accurately analyzed by the analyzing unit 32, and so on. Moreover, the management apparatus 2 and the analyzing apparatus 3 may, to distribute the loads, execute the process of changing the reception data into the time-series data, the process of excluding the data not conforming to the predetermined condition and processing the reception data into the data that can be highly accurately analyzed by the analyzing unit 32, and so on.

The analyzing apparatus 3 is one example of an information processing apparatus and a reception-side information processing apparatus. The management apparatus 2 is one example of a receiving unit. Further, the analyzing apparatus 3 is one example of another receiving unit. The reception data processing unit 21 or the reception data processing unit 31 or both of the units 21, 31 are given by way of one example of a reception data processing unit.

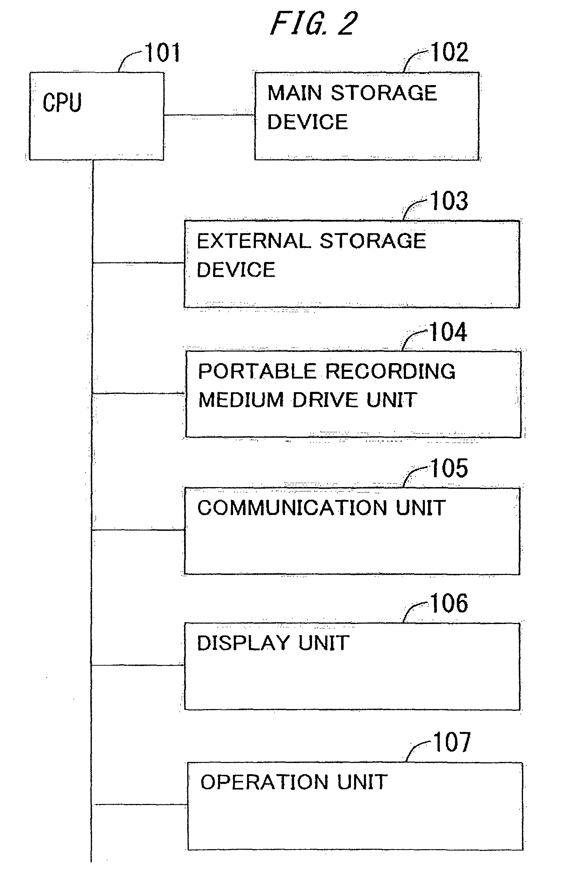

Each of the data acquiring apparatus 1, the management apparatus 2 and the analyzing apparatus 3 described above is the computer including the main storage device and the CPU (Central Processing Unit). The data acquiring apparatus 1, the management apparatus 2, the analyzing apparatus 3, etc. execute, based on the computer program deployed in the executable manner on, e.g., the main storage device, the processes of the data acquiring unit 11, the communication unit 12, the setting unit 15, the extraction unit 16, the reception data processing unit 31 or the analyzing unit 32. However, at least a part of the data acquiring unit 11, the communication unit 12, the setting unit 15, the extraction unit 16, the reception data processing unit 31 or the analyzing unit 32 may also be configured by a hardware circuit. FIG. 2 illustrates a hardware configuration of the computer by way of one example. The computer in FIG. 2 is used as, e.g., the data acquiring apparatus 1, the management apparatus 2 or the analyzing apparatus 3.

The computer in FIG. 2 includes a CPU 101, a main storage device 102, an external storage device 103, a portable storage medium drive unit 104, a communication unit 105, a display unit 106 and an operation unit 107. The CPU 101 executes the computer program stored on the main storage device 102, and executes processes of a variety of computers. The main storage device 102 is stored with the computer program executed by the CPU 101 or the data, etc. that are processed by the CPU 101. The main storage device 102 includes a volatile DRAM (Dynamic Random Access Memory), a nonvolatile ROM (Read Only Memory), etc.

The external storage device 103 stores the computer program or the data on a medium called a secondary storage medium out side the main storage device. The external storage device 103 is exemplified such as a hard disk drive and an SSD (Solid State Drive).

The portable storage medium drive unit 104 is a drive for portable mediums such as a CD (Compact Disc), a DVD (Digital Versatile Disk), a Blu-ray disc, a USB (Universal Serial Bus) memory. The portable storage medium drive unit 104 holds the medium detachably. These mediums are stored with the computer programs installed into the main storage device 102, the external storage device 103, etc., the data to be processed by the CPU 101, the already processed data of the CPU 101, and so forth.

The communication unit 105 is an interface connected to the network and serving to perform the communications with other computers or other apparatuses. The communication unit 105 is exemplified such as a NIC (Network Interface Card) and a LAN (Local Area Network) card. However, the communication unit 105 may also be an interface for establishing the connections with peripheral apparatuses, the interface being such as a USB (Universal Serial Bus) interface and a PCI (Peripheral Component Interconnect) interface. The communication unit 105 may further be a wireless interface for the wireless LAN, etc. Note that FIG. 2 depicts one single communication unit 105, however, the computer may be equipped with a plurality of communication units 105. For example, one communication unit 105 may perform the communications with other computers, while other communication units 105 may perform the communications with the monitoring target apparatuses, etc.

The display unit 106 is exemplified by a liquid crystal display device, an electroluminescence panel, etc. The operation unit 107 includes, e.g., a keyboard, a pointing device, etc. Moreover, the pointing device can be exemplified such as a mouse, a touch pad and a touch panel.

### <Data Structure>

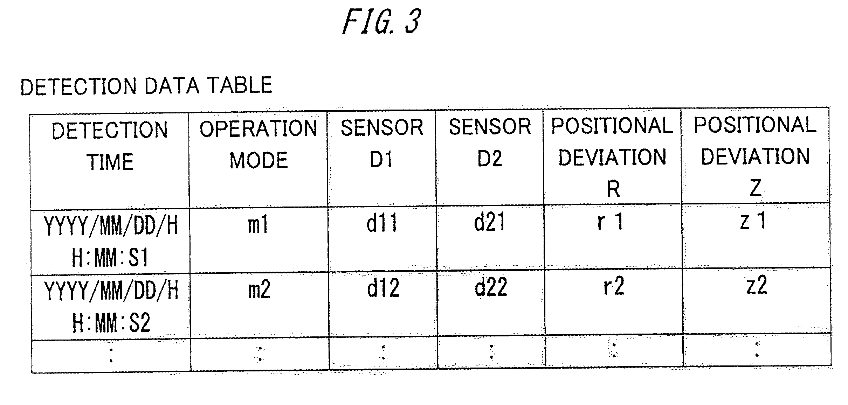

FIG. 3 is a diagram illustrating a data structure of a detection data table for storing the detection data acquired by the data acquiring unit 11 from the monitoring target apparatus. In the Example 1, each record (each row in FIG. 3) of the detection data table contains a "detection time" field, an "operation mode" field, a "sensor D1" field, a "sensor D2" field, a "positional deviation R" field and a "positional deviation Z" field. In the respective Examples from the Example 1 onward, a type of a value stored in each of the fields arranged in one row of the table, is to be called an "attribute". Further, a name of the attribute is to be called an "attribute name", and information for identifying the attribute is to be called an "attribute ID. The attribute name can be, as in FIG. 3, exemplified such as the "sensor D1", the "sensor D2", the "positional deviation R" and the "positional deviation Z". Accordingly, in the respective Examples from the Example 1 onward, the attribute can be also said to be a type of the data acquired from the monitoring target apparatus.

Note that a first row of the table in FIG. 3 is a row of titles representing the respective attribute names but not indicating the detection data acquired from the monitoring target apparatus. Further, FIG. 3 illustrates one single detection data table, however, the information system may be provided with a plurality of detection data tables.

The "detection time" field is stored with time (timestamp data) when the detection data are detected from the monitoring target apparatus. The "operation mode" field is stored with pieces of information specifying operation statuses at the detection time of the monitoring target apparatus, the information identifying control statuses of the monitoring target apparatus, such as an startup active status, an operation active status, a specified process 1 execution active status, a specified process 2 execution active status and a stop operation active status. The information identifying the control statuses may be, e.g., numeric values of codes, etc., specified bit patterns, specified character strings, and so on.

The "sensor D1" field and the "sensor D2" field are stored with detection data values associated with the respective attributes of the sensor D1 and the sensor D2, the detection data being acquired by the data acquiring unit 11. The example of FIG. 3 exemplifies the sensors D1, D2, however, it does not mean that the number of the sensors is limited to "2" in the information system, and the data acquiring unit 11 may acquire the values from three or more sensors. The "positional deviation R" field and the "positional deviation Z" field are stored with positional deviations in an R (radius) direction and in a Z (axis) direction of, e.g., a cylindrical coordinate system. Herein, the "deviation" connotes a difference between a control target value and an actually measured value. In the information system, however, it does not mean that the position control is limited to the cylindrical coordinate system, and an XYZ coordinate system, a polar coordinate system, a toroidal coordinate system, etc. are also available. Furthermore, it does not mean that the types of the attributes are limited to those in FIG. 3.

The communication unit 12 of the data acquiring apparatus 1 illustrated in FIG. 1 organizes the data of the detection data table as a set of data being categorized by the detection time, the attribute ID and the value, and transmits the set of data to the management apparatus 2. To be specific, the respective values (m1, m2, d11, d12, etc.) in the detection data table illustrated in FIG. 3 are transmitted to the management apparatus 2 in a format of (detection time, attribute ID, value) and in a state where the data values are separately registered on a field-by-field basis such as the detection time field of the table. Items of the data to be transmitted are given such as (YYYY/MM/DD/HH:MM:S1, operation mode, m1), (YYYY/MM/DD/HH:MM:S1, sensor D1, d11), (YYYY/MM/DD/HH:MM:S1, sensor D2, d21), (YYYY/MM/DD/HH:MM:S2, operation mode, m2), etc.

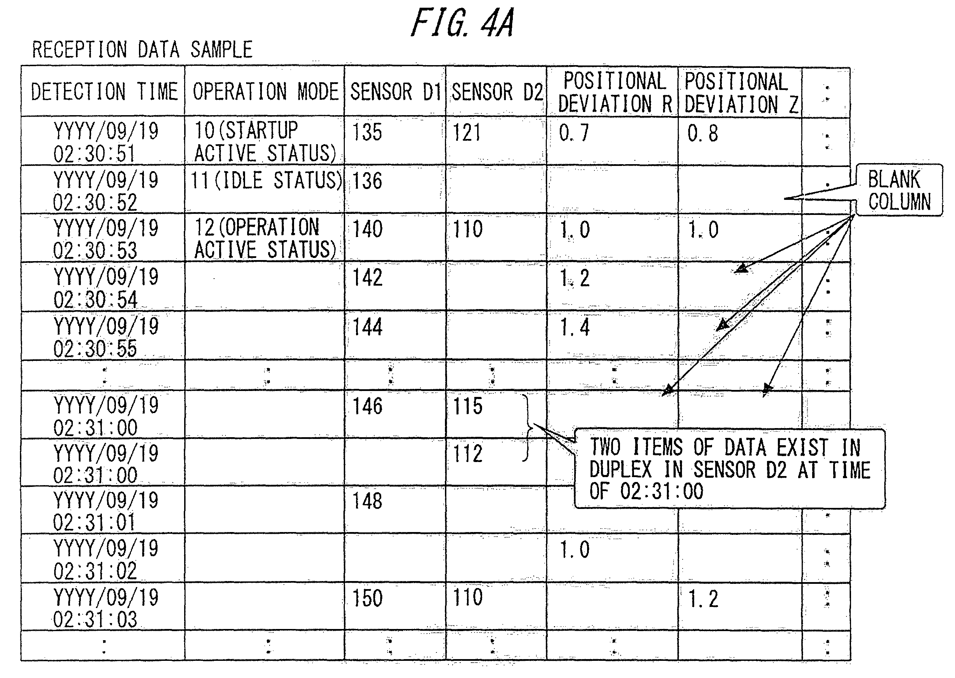

FIG. 4A illustrates a sample of the reception data received by the management apparatus 2 or the analyzing apparatus 3. For example, the reception data processing unit 21 of the management apparatus 2 organizes the reception data categorized by the plurality of attributes IDs at the same point of time (specified by the same timestamp) as one set of data, and stores the respective sets of data in the table. Thus, the reception data categorized by the plurality of attribute IDs at the same point of time (same timestamp) are organized as one set of data and stored on the row-by-row basis, and an aggregation of these data is called a reception data table. The table in FIG. 4A is one example of a reception data table. Note that a comment is given in parentheses "( )" such as "10 (startup active status)" in the data in the "operation mode" field of the reception data sample (reception data table) in FIG. 4A, however, it does not mean that the comment is transferred and received in the information system.

Further, a blank column in the data of FIG. 4A represents that the management apparatus cannot receive the data. For example, in a second row (detection time is 02:30:52) of the reception data in FIG. 4A, a value in the "sensor D1" field is "136". On the other hand, in the same second row, the "sensor D2" field, the "positional deviation R" field and the "positional deviation Z" field are blank (null value). Accordingly, in FIG. 4A, these blank columns indicate that the management apparatus 2 or the analyzing apparatus 3 cannot receive any data in the "sensor D2" field, the "positional deviation R" field and the "positional deviation Z" field at the detection time "02:30:52". The blank column generated in the reception data table is derived from, e.g., omitting a transmission of the detection data because the extracting unit 16 of the data acquiring apparatus 1 determines that there is no variation in detection data.

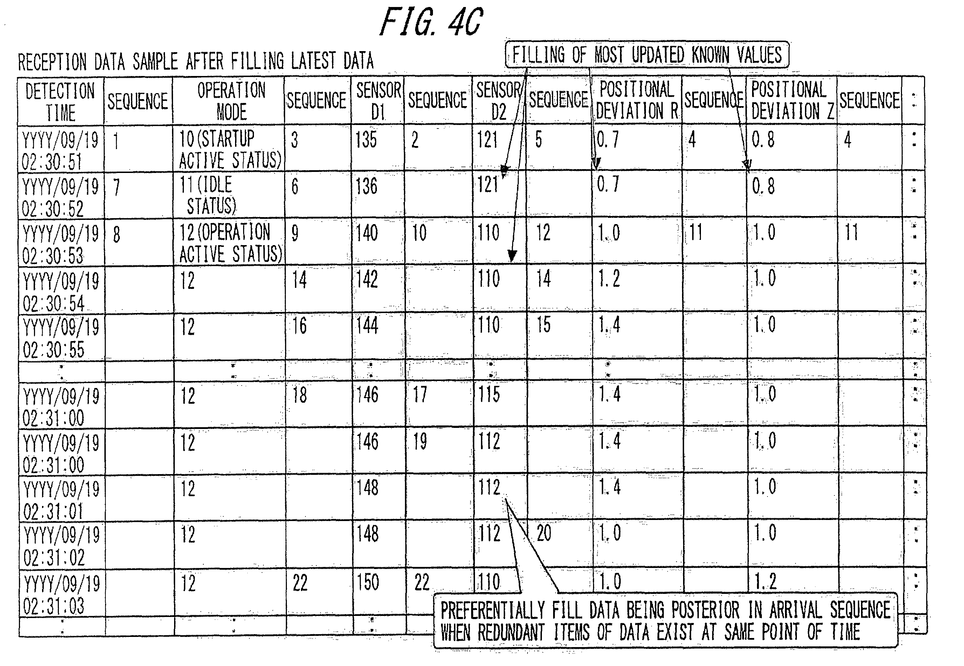

Note that when the blank columns occur in the same row as in FIG. 4A, i.e., when there are generated the fields stored with the detection data being received and the fields stored with the null values of the detection data not being received in the row of the same point of time in the reception data table, the management apparatus 2 or the analyzing apparatus 3 executes a process of filling most updated known values (which are also referred to as the latest known data) in the blank columns and converting the reception data into the time-series data as illustrated in FIG. 4C. The most updated known value represents the latest detection data in the detection data being already acquired by the management apparatus 2 or the analyzing apparatus 3 at the detection time of the detection data in the row (attributes) containing the blank column in the reception data table.

Moreover, the time data of the detection time "02:31:00" exist in duplex over the two rows at the "sensor D2" field. This indicates that the management apparatus 2 receives plural items of data at the same point of time. In the information system, with respect to the duplex data at the same point of time, the reception data processing unit 21 of the management apparatus 2 or the reception data processing unit 31 of the analyzing apparatus 3 executes a process of converting the data generated when the variation occurs into the time-series data by preferentially using the data being posterior in the arrival sequence as the most updated known value. Note that when the reception data processing unit 21 of the management apparatus 2 or the reception data processing unit 31 of the analyzing apparatus 3 receives the plural items of data at the same point of time, the management apparatus 2 or the analyzing apparatus 3 may delete the duplex data. Moreover, the management apparatus 2 or the analyzing apparatus 3 may execute the process of converting the data generated when the variation occurs into the time-series data by preferentially using the data being posterior in the arrival sequence after retaining the duplex data.

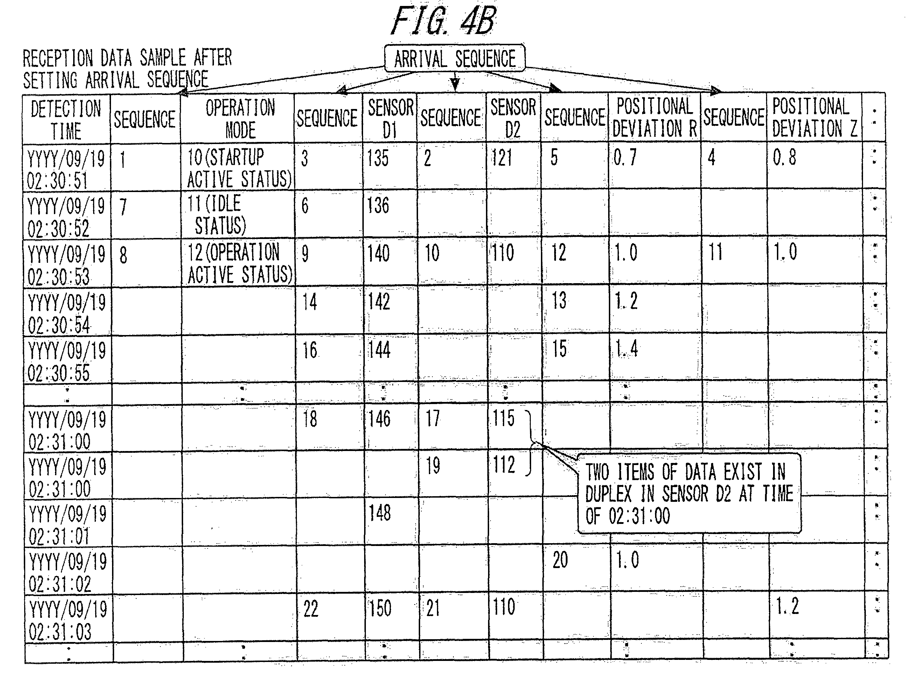

FIG. 4B illustrates a sample of the reception data after setting the arrival sequence. As already explained in FIG. 1, in the information system, for instance, the reception data processing unit 21 of the management apparatus 2, upon receiving the detection data from the data acquiring apparatus 1, allocates serial numbers of the arrival sequence of the detection data. The example in FIG. 4B is that the serial numbers of the arrival sequence are allocated in common (uniquely) to all of the attributes in the reception data table. Specifically, when the reception data take the format of (detection time, attribute ID, value), the reception data allocated with the arrival sequence (serial numbers) comes to take a format of (detection time, arrival sequence, attribute ID, value). For example, the arrival sequence (serial numbers) is allocated such as (YYYY/09/19/02:30:51, 1, operation mode, 10), (YYYY/09/19/02:30:51, 2, sensor D2, 121), (YYYY/09/19/02:30:51, 3, sensor D1, 135), (YYYY/09/19/02:30:51, 4, positional deviation Z, 0.8), (YYYY/09/19/02:30:51, 5, positional deviation R, 0.7) and (YYYY/09/19/02:30:52, 6, sensor D1, 136).

Note that the reception data processing unit 21 of the management apparatus 2 may set the serial numbers of the arrival sequence per attribute. To be specific, the reception data processing unit 21 may allocate the arrival sequence to the data having the same attribute ID. In this case, the arrival sequence (serial numbers) is allocated to the reception data sample per attribute ID, and hence, e.g., in connection with the sensor D1, the arrival sequence is allocated such as (YYYY/09/19/02:30:51, 1, sensor D1, 135), (YYYY/09/19/02:30:52, 2, sensor D1, 136) and (YYYY/09/19/02:30:53, 3, sensor D1, 140). The same is applied to the data in other field IDs.

In the information system, for instance, the management apparatus 2 or the analyzing apparatus 3 segments the reception data per attribute ID, then sorts out the data in a way that sets a detection time sequence as a first key and the arrival sequence as a second key, and saves the sorted data in the reception data table after setting the arrival sequence as in FIG. 4B.

FIG. 4C is a data example in which to execute a process of filling the most updated known values in the blank columns of the reception data table in FIG. 4B. In comparison with FIG. 4B, for example, the most updated known value "121" (value of time "02:30:51") is filled in the blank column of the "sensor D2" field (of the record) specified by the time "02:30:52" in FIG. 4C. Moreover, at the same point of time, the most updated known value (the value of time "02:30:51") "0.7" is filled in the blank column of the "positional deviation R" field. Furthermore, at the same point of time, the most updated known value (the value of time "02:30:51") "0.8" is filled in the blank column of the "positional deviation Z" field. Still further, e.g., at the time "02:30:54", the most updated known value (the value of time "02:30:53") "110" is filled in the blank column of the "sensor D2" field.

On the other hand, at the time "02:31:00", two values given in the "sensor D2" field are received in duplex. Thus, when the management apparatus 2 receives in duplex the plural items of data having the same detection time, the reception data processing unit 21 of the management apparatus 2 or the reception data processing unit 31 of the analyzing apparatus 3 fills the most updated known value in the blank column (the same column as the most updated known value) of the later detection time of the reception data table by preferentially using the reception data being posterior in the arrival sequence as the most updated known value.

However, the reception data processing unit 21 of the management apparatus 2 or the reception data processing unit 31 of the analyzing apparatus 3 may delete the items of data excluding the data existing at a tail of the arrival sequence from the data received in duplex at the same detection time. In other words, in the information system, the management apparatus 2 or the analyzing apparatus 3 may also preferentially make the detection data being posterior in the arrival sequence remain in the reception data table in the plural sets of detection data having the same detection time.

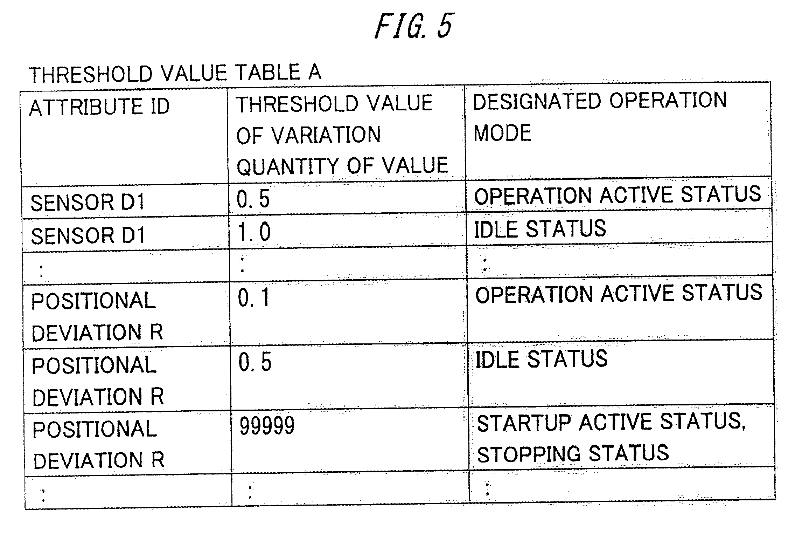

FIG. 5 is a diagram illustrating a structure of a threshold value table A. The threshold value table A designates a threshold value for determining whether each of the values of the detection data varies when in a specified operation mode. The threshold value table A contains fields such as an attribute ID, a threshold value of variation quantity of a value specified by the attribute ID, and a designated operation mode.

In an example of FIG. 5, for example, with respect to the value specified by the attribute ID named "sensor D1", when the operation mode is an operation active status, the threshold value of the variation quantity of the value is set to "0.5". Accordingly, when the operation mode of the monitoring target apparatus is the operation active status, even when the value of the sensor D1 varies less than "0.5", the extraction unit 16 of the data acquiring apparatus 1 determines that there is no variation in value. Further, when the operation mode is an idle status, the threshold value of the variation quantity of the value of the sensor D1 is set to "1.0". Hence, the operation mode of the monitoring target apparatus is the idle status, in which case even when the value of the sensor D1 varies less than "1.0", the extraction unit 16 of the data acquiring apparatus 1 determines that the value does not vary. The same is applied to other attribute IDs, e.g., the positional deviation R, etc.

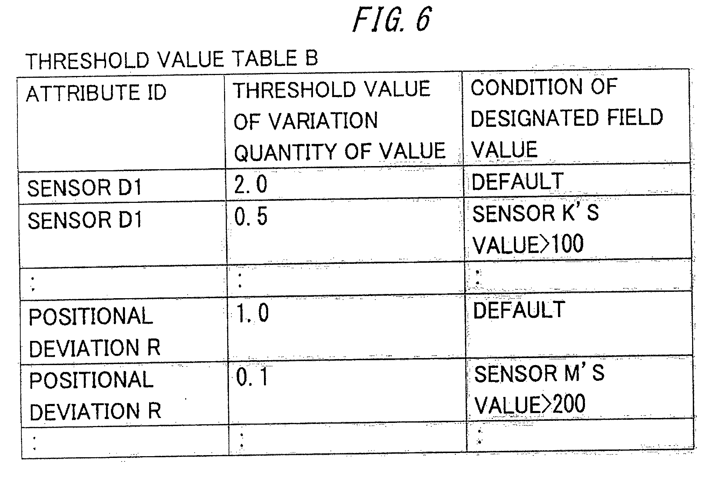

FIG. 6 is a diagram illustrating a structure of a threshold value table B. The threshold value table B designates a threshold value for determining whether a value of the determination target detection data varies when a value of the detection data of a specified attribute ID is under a designation condition. The threshold value table B contains fields such as an attribute ID of the determination target detection data, a threshold value of variation quantity of the value of the detection data specified by the attribute ID, and a designation condition with respect to the value of the detection data of the specified attribute ID. The designation condition for the value of the detection data of the specified attribute ID will hereinafter be called an attribute value designation condition.

In an example of FIG. 6, e.g., with respect to a value specified by the attribute ID named "sensor D1", a default threshold value is "2.0". On the other hand, when a value of a sensor K exceeds "100", the threshold value of the variation quantity of the value of the sensor D1 becomes "0.5". In this example, the attribute value designation condition is that the value of the sensor K exceeds "100". Namely, the threshold value table B enables the variation threshold value of the detection data to be set to a different value in a way that corresponds to the value condition in the specified attribute (e.g., the sensor K in the example of FIG. 6). The same is applied to other attribute IDs, e.g., the positional deviation R, etc.

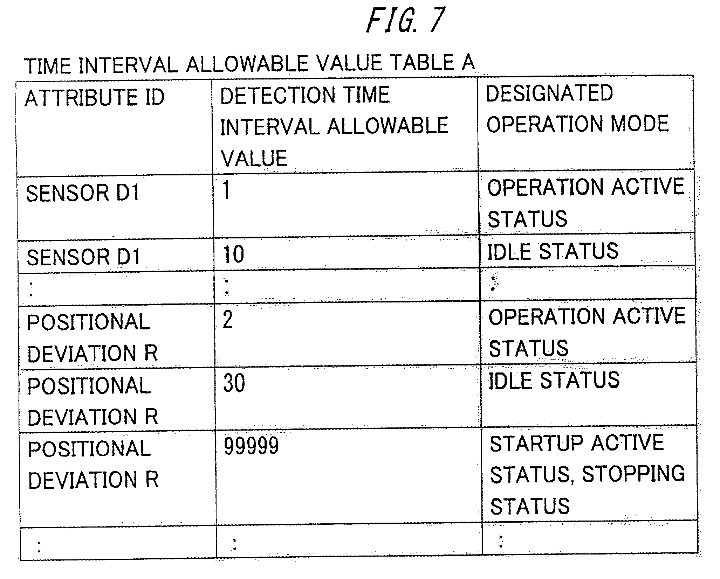

FIG. 7 is a diagram illustrating a structure of a time interval allowable value table A. The time interval allowable value table A designates a lower limit value of each of detection time intervals of the respective detection data when in the specified operation mode. The time interval allowable value table A contains fields such as an attribute ID, a detection time interval allowable value of the detection data specified by the attribute ID and a specified operation mode.

In an example of a FIG. 7, for instance, with respect to the detection data specified by the attribute ID named "sensor D1", when the operation mode is the operation active status, the detection time interval allowable value is set to "1". Hence, when the operation mode of the monitoring target apparatus is the operation active status, a value of the sensor D1 is detected at a time interval "1". Further, when the operation mode is the idle status, the detection time interval allowable value of the sensor D1 is set to "10". Accordingly, when the operation mode of the monitoring target apparatus is the idle status, the value of the sensor D1 is detected at a time interval "10". The same processing is applied to other detection data, e.g., the positional deviation R, etc.

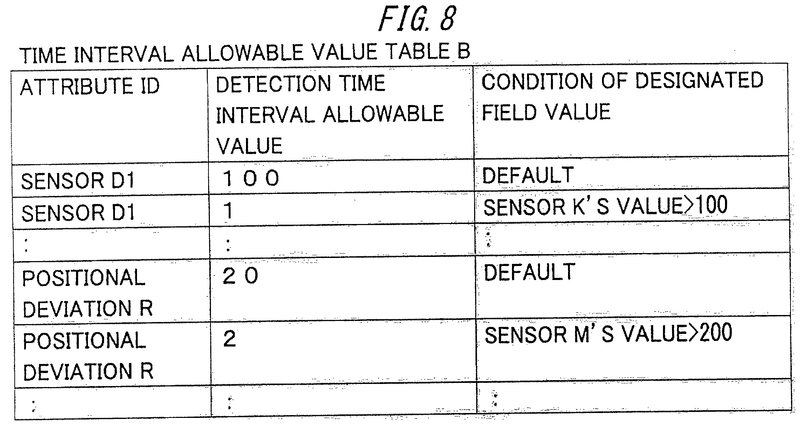

FIG. 8 is a diagram illustrating a structure of a time interval allowable value table B. The time interval allowable value table B designates a lower limit value of each of the detection time intervals of the respective detection data when a value of the specified attribute is under a designation condition. The time interval allowable value table B contains fields such as an attribute ID of the determination target detection data, a detection time interval allowable value of a value specified by the attribute ID, and a designation condition of an attribute value.

In an example of FIG. 8, for example, with respect to the detection data specified by the attribute ID named "sensor D1", a default detection time interval is "100". On the other hand, when the value of the sensor K exceeds "100", the threshold value of the variation quantity of the value of the sensor D1 becomes "1". To be specific, the threshold value table B enables the detection time interval of the determination target detection data to be set to a different value in a way that corresponds to the value condition in the specified attribute (e.g., the sensor K in the example of FIG. 8). The same processing is applied to other detection data, e.g., a case of the positional deviation R, etc. being set as the determination target.

### <Processing Procedure; Process of Monitoring Target Apparatus>

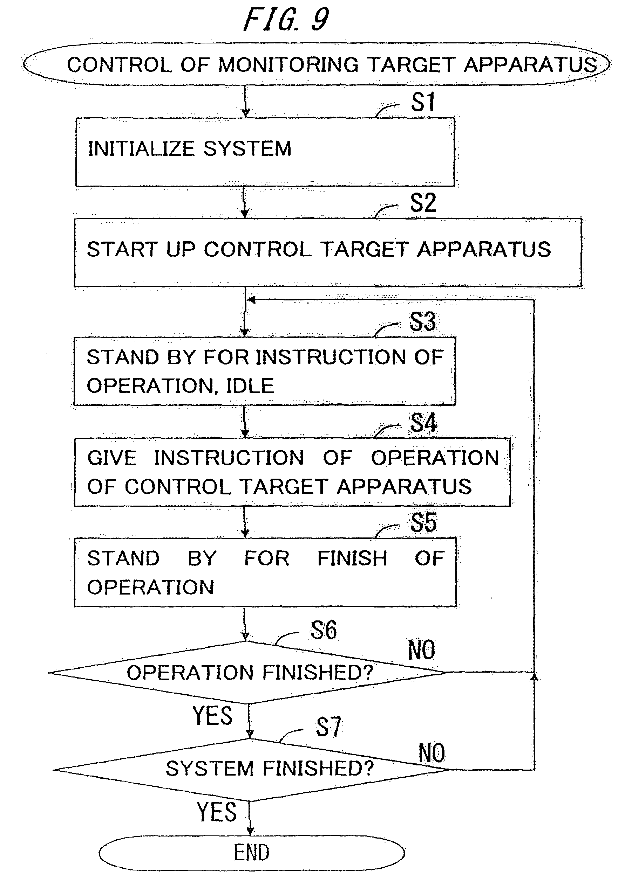

FIG. 9 is a flowchart illustrating a control flow of the monitoring target apparatus. The monitoring target apparatus is started up as the user performs, e.g., a startup operation of the apparatus, and executes processes in FIG. 9.

The monitoring target apparatus, e.g., initializes the system after starting up the apparatus (S1). Herein, the "system" connotes the whole apparatus including a control computer included in the monitoring target apparatus and a control target apparatus to be controlled by the control computer. The initialization of the system involves loading, e.g., a control program into the control computer of the monitoring target apparatus.

Then, the control computer of the monitoring target apparatus supplies electric power to the respective units of the apparatus, thereby starting up the control target apparatus (S2). For example, the control computer of the monitoring target apparatus supplies the electric power to a variety of circuit boards, an actuator, a motor, a pump, a coil, a detection circuit for a sensor output, etc. Then, the monitoring target apparatus stands by for an operation instruction given from the user (S3).

Then, for instance, the control computer instructs an operation to the control target apparatus in accordance with the user's operation or the processing of the control program (S4). The control target apparatus operates based on the instruction given from the control computer. For example, the control target apparatus locates the actuator in a target position, drives the actuator at a target speed to keep physical quantities of control targets in predetermined states. For example, the control computer gives an instruction to keep, in the predetermined states, values of light, heat, a temperature, a pressure, a degree of vacuum, a velocity, an acceleration, a water quantity, an air flow rate, an electromagnetic force, an intensity of electromagnetic waves and irradiated radiation, a direction of electromagnetic beams or charged beams, a beam size, a particle density, etc.

Subsequently, the control computer stands by for an end of the operation of the control target (S5). A finish of the operation of the control target is triggered by, e.g., an event of reaching a target value of the physical quantity of the control target, by a user's operation or by an instruction of the control program (YES in S6). Next, the control computer determines whether the system is stopped or not (S7). The system is stopped by, e.g., the user's operation or the instruction of the control program (YES in S7). Note that when the system is not stopped, the control computer loops back the control to S3.

### <Processing Procedure; Process of Data Acquiring Apparatus>

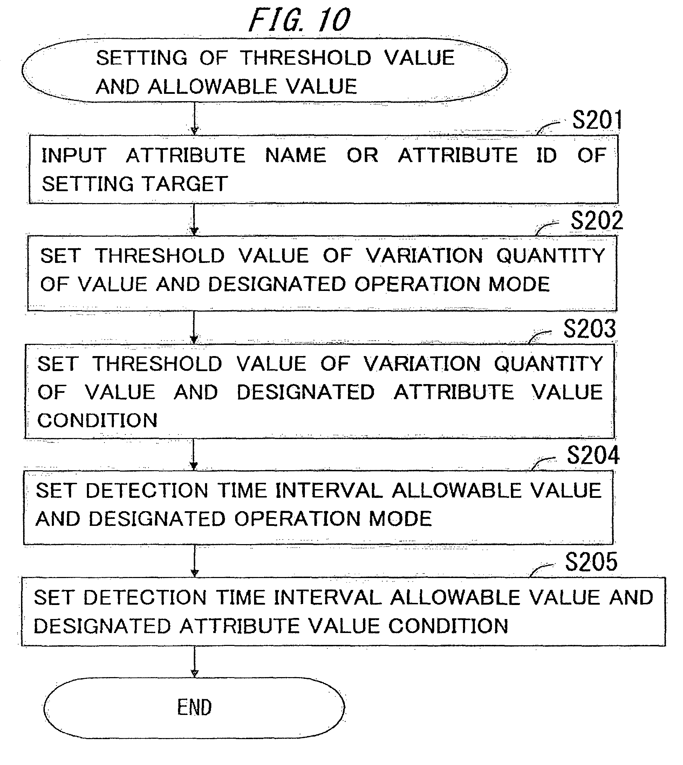

FIGS. 10 through 13 illustrate processes of the data acquiring apparatus 1. FIG. 10 is a flowchart illustrating a threshold value/allowable value setting process of the setting unit 15 of the data acquiring apparatus 1.

The setting unit 15 accepts information for specifying the monitoring target data such as the attribute name or the attribute ID of the setting target in accordance with the user's operation via the operation unit 107, etc. (S201). Note that the information set in S201 may also be items of information for specifying the detection data table to store the sets of detection data and for specifying the fields of the detection data table, e.g., a combination of a detection data table name (e.g., a table name. field name, etc.).

Next, the setting unit 15 accepts an input of the threshold value of the variation quantity of the value and an input of the designated operation mode (S202). For example, such a designation is inputted that the threshold value of the value variation is "TH1" when the operation mode of the monitoring target apparatus is the "operation active status".

Next, the setting unit 15 accepts an input of the threshold value of the variation quantity of the value and an input of the attribute value designation condition (S203). For example, such a designation is inputted that the threshold value of the value variation is "TH2" when a detection value of a sensor N is equal to or larger than "V1" in the monitoring target apparatus. Note that when the threshold value of the variation quantity of the value is designated such as "threshold value = 0" in S202 or S203, the data acquiring apparatus 1 extracts the whole detection data and transmits the extracted data to the management apparatus 2. Namely, the information system enables the user to set the whole detection data to be transferred to the management apparatus 2 when in the specified operation mode or when the specified attribute value designation condition is satisfied.

Next, the setting unit 15 accepts an input of the detection time interval allowable value and an input of the designated operation mode (S204). For example, such a designation is inputted that the detection time interval allowable value is "DT1" when the operation mode of the monitoring target apparatus is the "operation active status".

Subsequently, the setting unit 15 accepts an input of the detection time interval allowable value and an input of the attribute value designation condition (S205). For instance, such a designation is inputted that the detection time interval allowable value is "DT2" when the detection value of the sensor N is equal to or larger than "V1" in the monitoring target apparatus. As described above, the setting unit 15 accepts the threshold value/allowable value, etc. and sets these values in the threshold value tables A, B (FIGS. 5 and 6) and the time interval allowable value tables A, B (FIGS. 7 and 8) that are provided in the main storage devices 102, etc. with respect to the monitoring data desired by the user in accordance with the user's operation as by the processes in FIG. 10.

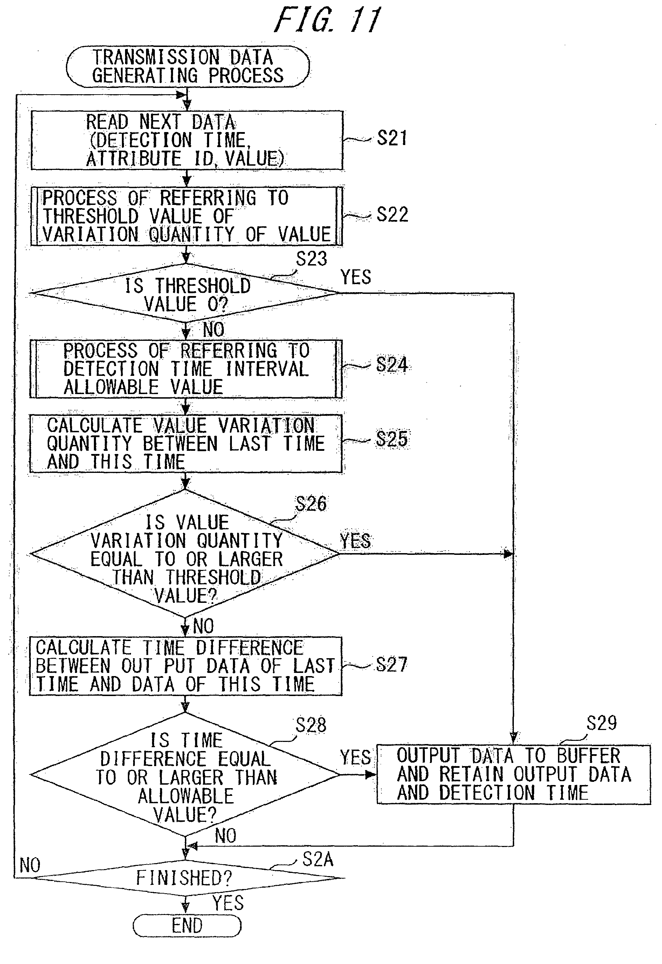

FIG. 11 is a flowchart illustrating a transmission data generating process of the extraction unit 16 of the data acquiring apparatus 1. The process in FIG. 11 is executed for every set of detection data given in the respective fields when entire items of detection data acquired by the data acquiring unit 11 of the data acquiring apparatus 1 are completely entered in all of the fields (sensor D1, sensor D2, etc. in FIG. 3).

In this process, to begin with, the extraction unit 16 reads the next detection data (detection time, attribute ID, value) (S21). Then, the extraction unit 16 refers to the threshold value of the variation of the value from within the threshold value tables A, B, etc., the value being set with respect to the attribute ID of the readout detection data (S22). Then, the extraction unit 16 determines whether the threshold value is "0" (a value less than the allowable value) (S23). The threshold value being "0" represents a user's instruction to transmit entire records of detection data to the management apparatus 2. Accordingly, when the threshold value is "0", the extraction unit 16 advances the control to S29. Specifically, in the information system, as described in FIG. 10, the user can make a designation so that the data acquiring apparatus 1 transmits the entire records of detection data to the management apparatus 2 according to conditions of whether the monitoring target apparatus is in the predetermined operation mode, whether the detection data of the predetermined sensor satisfy the predetermined condition, and so forth. The determination in S23 and the process in S29 are given by way of one example of an operation that "an extraction unit extracts a part or the whole of the acquired set of data irrespective of whether or not the acquired set of data includes the change when the monitoring target is in a predetermined status".

Moreover, the extraction unit 16 refers to the detection time interval allowable value being set in association with the attribute ID of the detection data from within the allowable value tables A, B (S24).

Then, the extraction unit 16 calculates a value variation quantity between the value of the last time and the value of this time (S25). Subsequently, it is determined whether the value variation quantity is equal to or larger than the threshold value (S26). When the value variation quantity is equal to or larger than the threshold value, the extraction unit 16 advances to the control to S29. Whereas when not satisfying a condition that the value variation quantity is equal to or larger than the threshold value, the extraction unit 16 calculates a time difference between the output data of the last time and the data of this time (S27). The "output data of the last time" connotes the detection data being output to a buffer in the process of S29 last time. Then, the extraction unit 16 determines whether the time difference is equal to or larger than the allowable value of the detection time interval (S28). Then, when the time difference is equal to or larger than the allowable value, the extraction unit 16 advances the control to S29.

The extraction unit 16, when the determination is "YES" in S26 or S28, outputs the detection data (detection time, attribute ID, value) being processed at the present to the buffer, and retains the output values together with the detection time thereof in the main storage device 102, etc. (S2 9) .

Then, the extraction unit 16 determines whether the processing is finished (S2A). For example, when all of the data in the detection data table are processed, the extraction unit 16 finishes the processing. Whereas when unprocessed detection data are still in the detection data table, the extraction unit 16 loops back the control to S21.

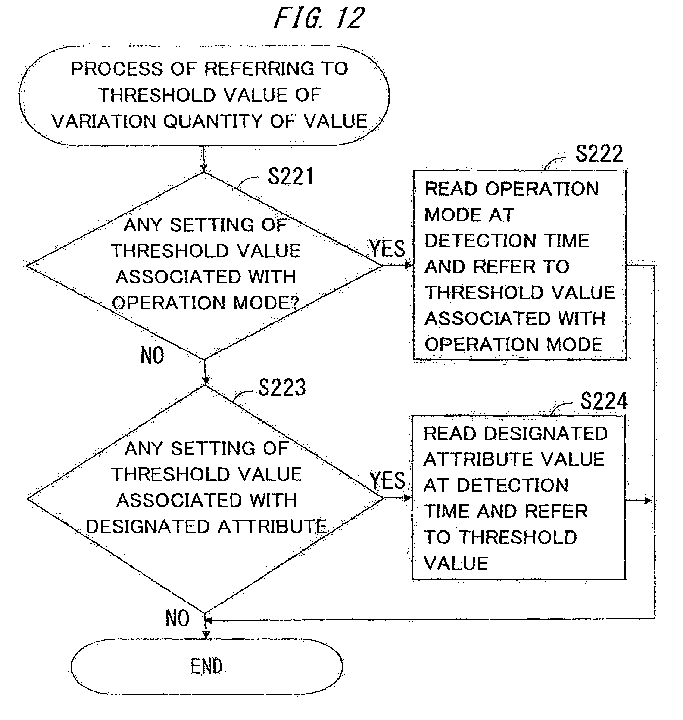

FIG. 12 is a flowchart illustrating details of a process (S22in FIG. 11) of the extraction unit 16, in which to refer to the threshold value of the variation of the value. In the process of FIG. 12, the extraction unit 16 determines whether the threshold value associated with the operation mode is set in the threshold value table A (S221). When the threshold value associated with the operation mode is set therein, the extraction unit 16 acquires, from the detection data table, the operation mode of the monitoring target apparatus at the detection time of the detection data being processed at the present. Note that the processes in FIGS. 11 and 12 are, as already mentioned, executed when the values associated with the entire fields at the respective points of detection time in the detection data table are acquired. Hence, the extraction unit 16 can acquire the operation mode at the detection time of the detection data being processed at the present. Then, the extraction unit 16 acquires the threshold value associated with the operation mode from the threshold value table A (S222). The process in S222 and the determination in S26 of FIG. 11 are given by way of one example of "determining, when the monitoring target is in a first status, that the acquired set of data includes the change by using, as a threshold value for determining that the acquired set of data includes the change, a threshold value different from the threshold value used when the monitoring target is in a second status other than the first status".

For example, in the threshold value table A of FIG. 5, "0.5" is set in the "threshold value of variation quantity of value" field associated with the sensor D1 when the operation mode is the operation active status, and "1.0" is set in the same "threshold value" field associated with the sensor D1 when the operation mode is the idle status. Accordingly, when the monitoring target apparatus is in the operation active status at the detection time of the detection data being processed at the present, the extraction unit 16 acquires "0.5" as the threshold value of the variation quantity of the value of the sensor D1. On the other hand, when the monitoring target apparatus is in the idle status at the detection time of the detection data being processed at the present, the extraction unit 16 acquires "1.0" as the threshold value of the variation quantity of the value of the sensor D1. The same processing as in the case of the sensor D1 described above is applied to handling the threshold values of other attribute values. The processing such as this enables the data acquiring apparatus 1 to transmit the detection data of the sensor D1, etc. upon a minute variation or a coarse variation in a way that corresponds to the operation mode of the monitoring target apparatus. It may be sufficient that the user, e.g., sets minute threshold values when the monitoring target apparatus is in the operation mode being easy to cause a failure or in the operation mode being close to a critical status, and sets coarse threshold values when the monitoring target apparatus is in the idle status or in the operation mode not being in the critical status.

Whereas when the determination in S221 is "NO", the extraction unit 16 determines whether the threshold value associated with the attribute value designation condition is set in the threshold value table B (S223). When the threshold value associated with the attribute value designation condition is set therein, the extraction unit 16 reads, from the detection data table, the attribute value designated in the attribute value designation condition at the detection time of the detection data being processing at the present. Then, the extraction unit 16 acquires the threshold value being set in association with the readout attribute value (S224).

The process in S224 and the determination in S26 of FIG. 11 are given by way of one example of "determining, when first data among the set of data acquired from the monitoring target satisfy a predetermined condition, that the acquired set of data includes the change by using, as a threshold value for determining that the acquired set of data includes the change, a threshold value different from a threshold value given when the first data do not satisfy the predetermined condition".

For example, in the threshold value table B of FIG. 6, "2.0" is set as a default value in the "threshold value of variation quantity of value" field associated with the sensor D1, and "0.5" is set in the threshold value of the sensor D1 when the value of the sensor K is larger than "100". Hence, "2.0" or "0.5" is selectively set as the threshold value of the variation quantity of the sensor D1, depending on whether the value of the sensor K at the detection time of the detection data being processing at the present exceeds "100". For example, when the detection data being processed underway is the physical quantity such as the temperature and the degree of vacuum, and when the sensor K's value being recognized easy to affect this physical quantity (e.g., a drive current value, a current value of the coil and power consumption of the apparatus) becomes equal to or larger than a predetermined value, it may be sufficient that the threshold value is set minutely.

Note that in the processing of FIG. 12, the extraction unit 16 executes the processes (S221, S222) for the threshold value associated with the operation mode in the threshold value table A in preference to the processes (S223, S224) for the threshold value associated with the attribute value designation condition in the threshold value table B. It does not, however, mean that the information system is limited to the process in FIG. 12. For instance, the extraction unit 16 may execute the processes (S223, S224) for the threshold value associated with the attribute value designation condition in the threshold value table B in preference to the processes (S221, S222) for the threshold value associated with the operation mode in the threshold value table A.

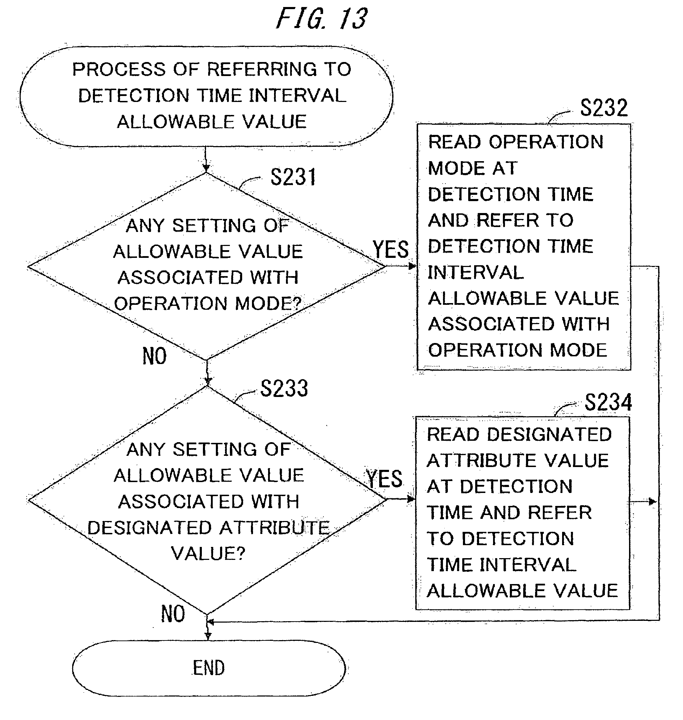

FIG. 13 is a flowchart illustrating details of the process (S23 in FIG. 11) of the extraction unit 16, in which to refer to the allowable value of the detection time interval. In the process of FIG. 13, the extraction unit 16 determines whether the time interval allowable value associated with the operation mode is set in the time interval allowable value table A (S231). When the time interval allowable value associated with the operation mode is set therein, the extraction unit 16 acquires the operation mode of the monitoring target apparatus at the detection time of the detection data being processing at the present from the detection data table. Then, the extraction unit 16 acquires the time interval allowable value associated with the operation mode from the time interval allowable value table A (S232).

The execution of the process in S232 and the execution of the determination in S28 of FIG. 11 are given by way of one example of "extracting, when the monitoring target is in a third status, the data at a time interval different from a time interval used when the monitoring target is in a fourth status other than the third status". Note that the first status may be the same as the third status, and the second status may be the same as the fourth status.

For example, in the time interval allowable value table A of FIG. 7, "1" is set in the "detection time interval allowable value" field associated with the sensor D1 when the operation mode is the operation active status, and "10" is set in the "detection time interval allowable value" field associated with the sensor D1 when the operation mode is the idle status. Hence, when the monitoring target apparatus is in the operation active status at the detection time of the detection data being processing at the present, the extraction unit 16 acquires "1" as the detection time interval allowable value of the sensor D1. On the other hand, when the monitoring target apparatus is in the idle status at the detection time of the detection data being processing at the present, the extraction unit 16 acquires "10" as the detection time interval allowable value of the sensor D1. The same processing as in the case of the sensor D1 described above is applied to handling the threshold values of other attribute values. The processing such as this enables the data acquiring apparatus 1 to transmit the detection data of the sensor D1, etc. at minute detection time intervals or coarse detection time intervals in a way that corresponds to the operation mode of the monitoring target apparatus. It may be sufficient that the user, e.g., sets the minute detection time intervals when the monitoring target apparatus is in the operation mode being easy to cause the failure or in the operation mode being close to the critical status, and sets the coarse detection time intervals when the monitoring target apparatus is in the idle status or in the operation mode not being in the critical status.

Whereas when the determination in S231 is "NO", the extraction unit 16 determines whether the time interval allowable value associated with the attribute value designation condition is set in the time interval allowable value table B (S233). When the time interval allowable value associated with the attribute value designation condition is set therein, the extraction unit 16 reads, from the detection data table, the attribute value of the attribute value designation condition in the time interval allowable value table B at the detection time of the detection data being processing at the present. Then, the extraction unit 16 acquires the detection time interval allowable value being set in association with the readout attribute value (S234).

The process in S234 and the determination in S28 of FIG. 11 are given by way of one example of "extracting, when third data among the set of data acquired in time series from the monitoring target satisfies a predetermined condition, fourth data among the set of data acquired in time series from the monitoring target at a time interval different from a time interval used when the third data does not satisfy the predetermined condition". It is to be noted that the first time-series data may be the same as the third time-series data, and the second time-series data may be the same as the fourth time-series data.

For example, in the time interval allowable value table B of FIG. 8, "100" is set as a default value in the "detection time interval allowable value" field associated with the sensor D1, and "1" is set in the detection time interval allowable value of the sensor D1 when the value of the sensor K is larger than "100". Hence, "1" or "100" is selectively set as the detection time interval of the sensor D1, depending on whether the value of the sensor K at the detection time of the detection data being processing at the present exceeds "100".

Note that in the processing of FIG. 13, the extraction unit 16 executes the processes (S231, S232) for the time interval allowable value associated with the operation mode in the time interval allowable value table A in preference to the processes (S233, S234) for the time interval allowable value associated with the attribute value designation condition in the time interval allowable value table B. It does not, however, mean that the information system is limited to the process in FIG. 13. For example, the extraction unit 16 may execute the processes (S233, S234) for the time interval allowable value associated with the attribute value designation condition in the time interval allowable value table B in preference to the processes (S231, S232) for the time interval allowable value associated with the operation mode in the time interval allowable value table A.

### <Processing Procedure; Processes of Management Apparatus and Analyzing Apparatus>

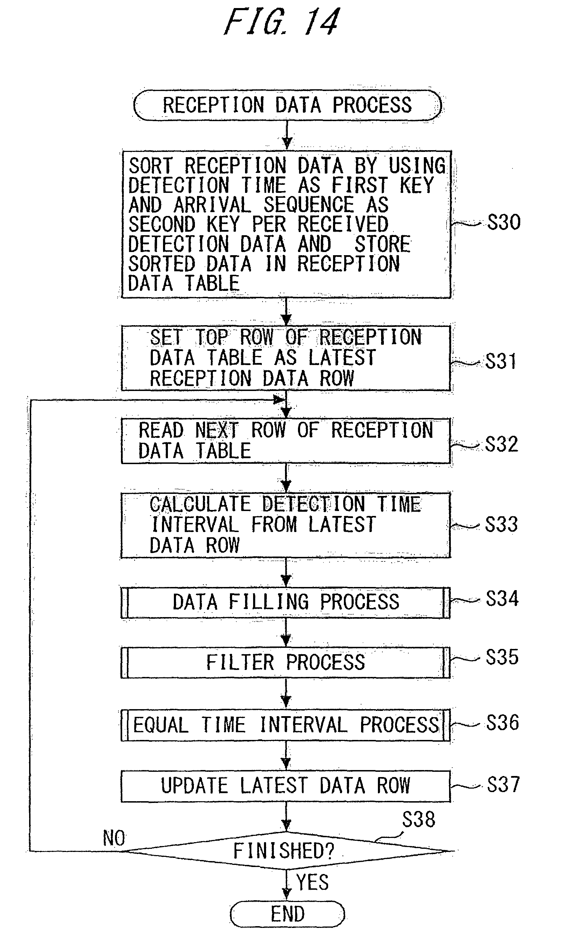

Processes of the analyzing apparatus 3 will be described with reference to FIGS. 14 through 17. In the following Examples 1 and 2, the management apparatus 2 receives the data from the data acquiring apparatus 1 and stores the received data in, e.g., the external storage device. The management apparatus 2 is one example of a receiving unit. However, the analyzing apparatus 3 may also be one example of the receiving unit. Note that the management apparatus 2 attaches the arrival sequence to the respective sets of detection data. Hence, the detection data transmitted from the data acquiring apparatus contain the fields such as the detection time, the attribute ID and the value, and the reception data stored in the external storage device by the management apparatus 2 contain the fields such as the detection time, the arrival sequence, the attribute ID and the value.

Then, the analyzing apparatus 3 processes the reception data coming from the management apparatus 2 in procedures given in from FIG. 14 onward. However, the management apparatus 2 may also execute at least a part of processes given in from FIG. 14 onward.

FIG. 14 is a flowchart illustrating the reception data process that is executed by a reception data processing unit 31 of the analyzing apparatus 3. The analyzing apparatus 3 executes the process in FIG. 14 with respect to the detection data containing the detection time detected for a predetermined period, e.g., the detection data anterior by a predetermined period of time or longer in the reception data stored in the external storage device of the management apparatus 2. With respect to the detection time anterior by the predetermined period of time or longer, it may be considered that the detection data may not be further added during processing from a start of the process in FIG. 14 onward. Processes from FIG. 14 onward will be described on the premise that the detection data are not further added with respect to the detection time of the detection data being processed underway.

In the process of FIG. 14, the reception data processing unit 31 executes sorting the processing target reception data by using the detection time as a first key and the arrival sequence as a second key per detection data, and stores a sorted result in the reception data table (refer to FIG. 4A) (S30). Next, the reception data processing unit 31 sets a top row of the reception data table as a latest reception data row (S31). At this time, values registered in the respective fields (respective attribute values) of the latest row become the most updated known values of each set of detection data. The most updated known values are defined as known items of latest detection data per detection data (the respective attributes, i.e., the sensor D1, etc.). The process of FIG. 14 is based on an assumption that the entire items of detection data (all of the attribute values) are completely registered in the top row of the reception data table. When a value of any one of the fields of the top row of the reception data table is not yet received, however, it may be sufficient that the most updated known values are acquired from the last reception data obtained by the reception data process executed last time and are set in the top row.

Then, the reception data processing unit 31 reads the next reception data (S32). Moreover, the reception data processing unit 31 calculates the detection time interval between the top row of the reception data table and the next reception row being read in S32 (S33). The detection time interval is referred to by an equal time interval process in S36. When the reception data processing unit 31 does not execute the equal time interval process in S36, however, it is feasible to omit the process of calculating the detection time interval in S33.

Then, the reception data processing unit 31 executes a data filling process (S34). The data filling process is a process of setting the most updated known values in the detection data not being received yet on the reception data table.

Next, the reception data processing unit 31 executes a filter process (S35). The filter process is a process of deleting the detection data matching with a predetermined condition. Next, the reception data processing unit 31 executes the equal time interval process (S36). The equal time interval process is a process of adding a row to between the rows of the reception data table so that the detection time interval of the reception data obtained as a result of processing in S34 and S35 becomes an equal detection time interval.

Then, the reception data processing unit 31 updates the new data row of the reception data table (S37). Further, the reception data processing unit 31 determines whether the processing is finished or not (S38). For example, the reception data processing unit 31 determines whether the processing reaches the tail of the reception data table, and, when the processing reaches the tail thereof, finishes the processing. Whereas when the processing doe not reach the tail of the reception data table, the reception data processing unit 31 loops back the control to S32.

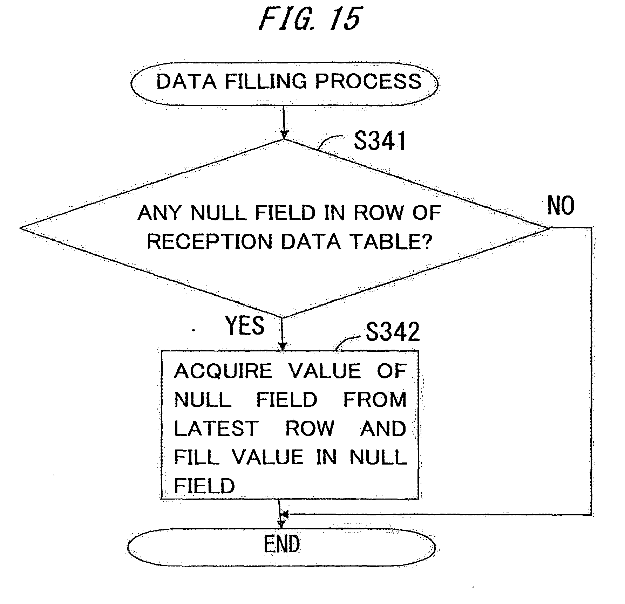

FIG. 15 illustrates details of the data filling process (S34 in FIG. 14). In the process of FIG. 15, the reception data processing unit 31 determines whether a null field exists in the row of the reception data table (S341). Then, when the null field exists therein, the reception data processing unit 31 acquires the most updated known value associated with the null field from the latest row, and fills the acquired value in the null field (S342). The data filling process is one example of "setting, when a set of the received data includes a value-unfilled attribute, a value being latest among known values of the attribute included in previously received time-series sets of data, as a value of the value-unfilled attribute".

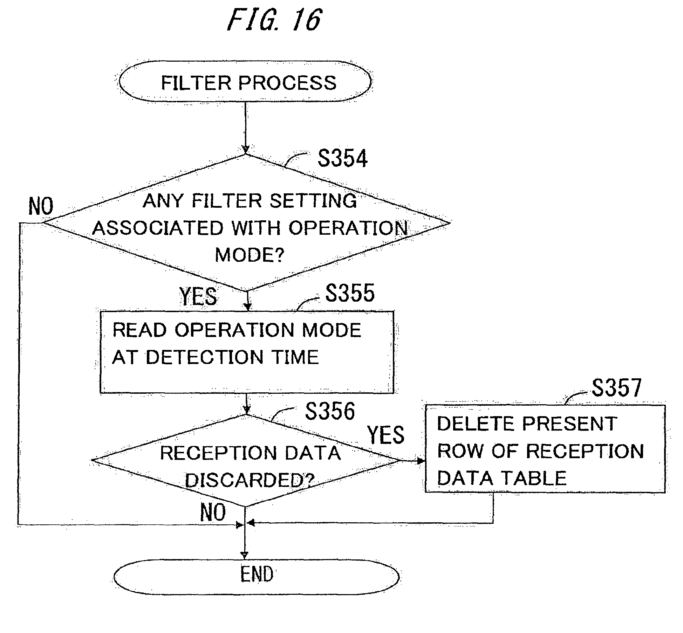

FIG. 16 illustrates details of the filter process (S35 in FIG. 14). In this process, the reception data processing unit 31 determines whether a filter setting corresponding to the operation mode is done (S354). The "filter setting corresponding to the operation mode" connotes a designation such as discarding the data when the operation mode of the monitoring target apparatus is a predetermined status and when the reception data satisfies a predetermined condition. A connotation of "when the operation mode of the monitoring target apparatus is the predetermined status" encompasses, e.g., a startup active status, a finishing process active status, a maintenance active status, etc. of the monitoring target apparatus. A connotation of "when the reception data satisfies the predetermined condition" encompasses, e.g., an unconditional case (an all-discarding condition), a case in which the value of the detection data enters a predetermined range, a case in which the variation of the value of the detection data exceeds a predetermined limit, and so on.

When the filter setting corresponding to the operation mode is done, the reception data processing unit 31 reads the operation mode at the detection time from the reception data table (S355). Then, the reception data processing unit 31 determines whether the reception data satisfies a data discarding condition (S356). When the reception data satisfies the data discarding condition, the reception data processing unit 31 advances the control to S357. When the determination in S356 is "YES", the reception data processing unit 31 deletes the row being processes at the present in the reception data table (S357). Subsequently, the reception data processing unit 31 terminates the filter process.

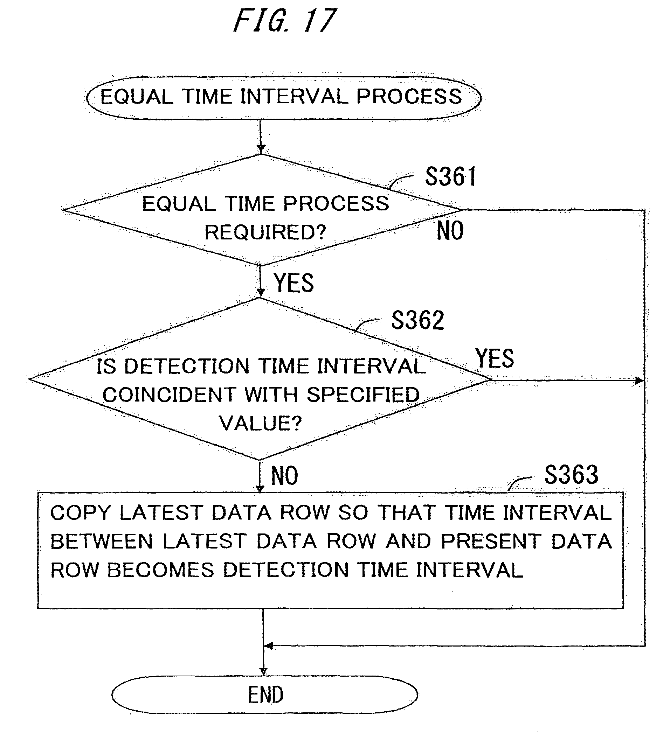

FIG. 17 is a flowchart illustrating details of the equal time interval process (S36 in FIG. 11). In the process of FIG. 17, the reception data processing unit 31 determines whether the equal time interval process is requested (S361). The case of the equal time interval process being requested is a case in which the analyzing unit 32 of the analyzing apparatus 3 (see FIG. 1) requests the time-series data at the equal time interval as analysis target data. Accordingly, for instance, when the analyzing unit 32 can process time interval variable time-series data, the equal time interval process is not required.

When the equal time interval process is requested, the reception data processing unit 31 next determines whether the detection time interval calculated in S33 of FIG. 11 is coincident with a specified value (S362). It may be sufficient that the specified value is set as a system parameter of the analyzing apparatus 3. Further, the user of the data acquiring apparatus 1, the management apparatus 2 or the analyzing apparatus 3 may also set the specified value, and the specified value being set may be shared among the respective apparatuses within the information system.

When the detection time interval is not coincident with the specified value, the latest data row is copied, and the copied data row is inserted in between the latest data row and the data row being processed at the preset so that the time interval between the latest data row and the present data row becomes the equal time interval on the reception data table (S363). The equal time interval process is one example of "organizing, when detecting a portion of an unequal time interval between two sets of data being located anterior and posterior within the time-series sets of data, the time-series sets of data at an equal time interval by copying the sets of data of the anterior time in the two sets of data being located at the unequal time interval to between the two sets of data".

### <Effect of Example 1>

As discussed above, according to the information system in the Example 1, the data acquiring apparatus 1 refers to the threshold value of the variation of the value, e.g., the threshold value of the variation of the value that is associated with the operation mode of the monitoring target apparatus and the threshold value of the variation of the value that is associated with the attribute value designation condition, thereby determining whether the detection data vary by the threshold value or larger. Accordingly, the data acquiring apparatus 1, even when transmitting only the varied data in the detection data to the management apparatus 2, can extract the focused detection data of the monitoring target apparatus according to a fineness of variation corresponding to the status of the monitoring target apparatus and the state of the specified detection data, and can transmit the extracted detection data to the management apparatus 2. In other words, the data acquiring apparatus 1 can adjust a degree of thinning out the detection data according to the status of the monitoring target apparatus or the state of acquiring the detection data, and can transmit the adjusted detection data to the management apparatus 2.

Moreover, the data acquiring apparatus 1 refers to the detection time interval allowable value, e.g., the detection time interval allowable value associated with the operation mode of the monitoring target apparatus and the detection time interval allowable value associated with the attribute value designation condition, thereby determining whether the detection time interval of the detection data to be transmitted to the management apparatus 2 is equal to or larger than the allowable value. Hence, the data acquiring apparatus 1, even when transmitting only the varied data in the detection data to the management apparatus 2, can extract the focused detection data of the monitoring target apparatus according to a fineness of the time interval according to the status of the monitoring target apparatus and the state of the specified detection data, and can transmit the extracted detection data to the management apparatus 2. In other words, the data acquiring apparatus 1 can adjust the time interval when thinning out the detection data according to the status of the monitoring target apparatus or the state of acquiring the detection data, and can transmit the adjusted detection data to the management apparatus 2.

Furthermore, the analyzing apparatus 3 in the Example 1 executes the process of filling the data in the reception data and is thereby enabled to organize, even when the detection data containing the varied values of the attributes (sensor, etc.) are transmitted from the data acquiring apparatus 1, the received detection data into the time-series data being formatted to completely enter the respective items of detection data in the entire fields at the respective points of time of the reception data table. Namely, as illustrated in FIG. 4A, even when acquiring the reception data containing the null fields in the reception data table, it is feasible to generate the data being formatted to completely fill the entire fields of attributes (sensor, etc.) with the respective items of detection data at the respective points of time, and to hand over the thus-generated data to the analyzing unit 3.

Moreover, the analyzing apparatus 3 executes the filter process and is thereby enabled to, when the detection data exist in duplex at the same point of time, when the value of the detection data is explicitly an abnormal value, when the monitoring target apparatus is in the predetermined operation mode and when the detection data satisfy the predetermined condition, discard the undesirable detection data and to hand over only the desirable detection data to the analyzing unit 32.

Still further, the analyzing apparatus 3 executes the equal time interval process and is thereby enabled to change the reception data into the time-series data being organized at the equal time interval. Accordingly, the analyzing unit 32 of the analyzing apparatus 3 is capable of handling the case of requesting the time-series data organized at the equal time interval and the case of requesting the time-series data organized at the variable time interval.

Through the processes described above, in the information system, the detection data are compressed to a necessary and sufficient degree, and, in the management apparatus 2 or the analyzing apparatus 3, it is possible to ensure sufficient accuracy required in the case of processing the detection data or to ensure time responsibility, etc. of the information system.

Note that as in FIGS. 4A - 4C, when the plural items of data exist in duplex at the same point of time, the management apparatus 2 or the analyzing apparatus 3 may make the data remain, which is posterior in terms of the arrival sequence in the redundant items of data. Then, the management apparatus 2 or the analyzing apparatus 3 may eliminate the redundancy of the data from the reception data table by deleting the data other than the data being the latest in terms of the arrival sequence in the redundant items of data.

### [Example 2]

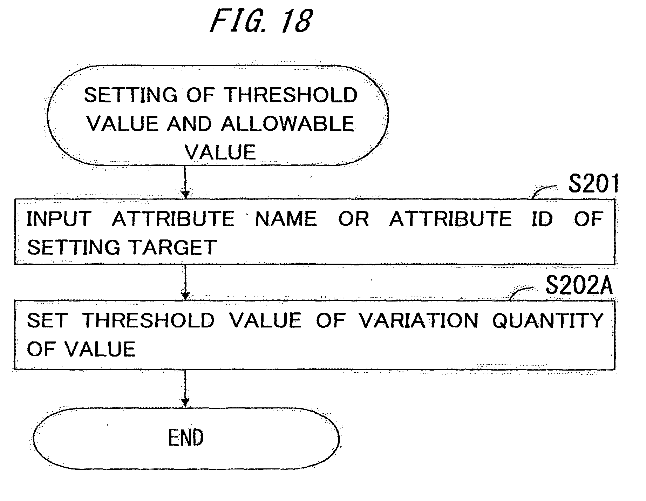

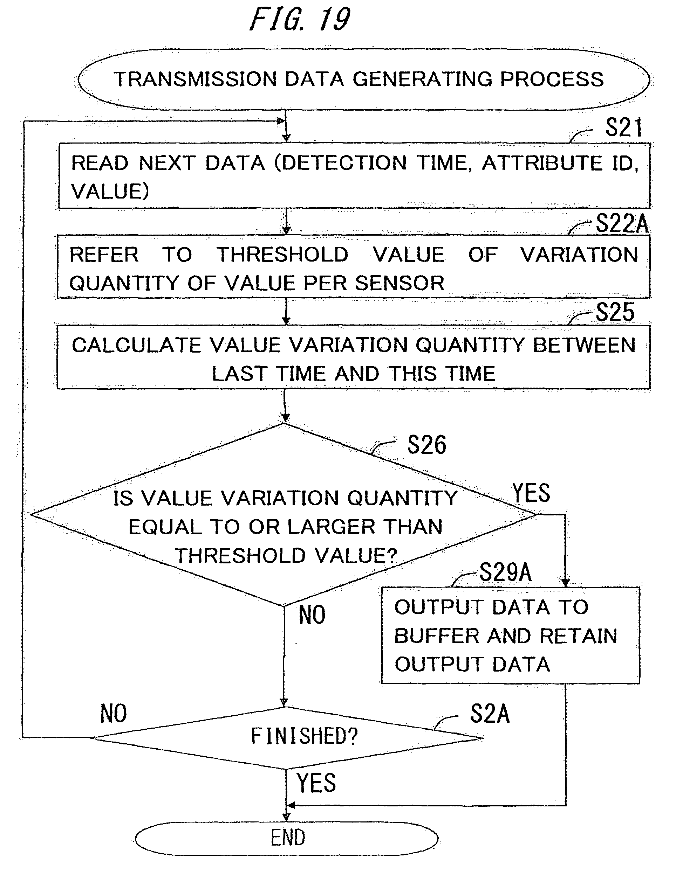

The information system in a second working example (Example 2) will be described with reference to FIGS. 18 and 19. In the Example 1, the extraction unit 16 of the data acquiring apparatus 1 extracts the detection data acquired from the monitoring target apparatus in accordance with the predetermined condition, and communication unit 12 transmits the extracted data to the management apparatus 2 and the analyzing apparatus 3. The Example 1 refers to, as the conditions for extracting the detection data, the threshold value of the variation quantity of the value in association with the predetermined operation mode, the threshold value of the variation quantity of the value in association with the condition for the designated field value, the detection time interval allowable value, etc., which are illustrated in FIGS. 5 - 9. Then, as illustrated in FIG. 11, when the detection data acquired by the data acquiring apparatus 1 match with the conditions illustrated in FIGS. 5 - 9, the extraction unit 16 of the data acquiring apparatus 1 extracts the detection data by use of the associated threshold values or time interval allowable values. The process of the extraction unit 16 may be more simplified than in the Example 1. For example, the condition for extracting the detection data may involve using only the type of the detection data, i.e., the threshold value associated with each of the attributes such as the sensor D1, the sensor D2, the positional deviation R and the positional deviation Z.

Other components and operations of the Example 2 are the same as those of the Example 1. The Example 2 will hereinafter discuss different points from the Example 1. Note that the components of the management apparatus 2 and the analyzing apparatus 3 in the Example 1 are usable as they are in the Example 2. Hence, the information system in the Example 2 has the same configuration as in FIG. 1 of the Example 1. Such being the case, in the following Example 2, the same components as those in the Example 1 will be described by using the same numerals and symbols as those in the Example 1.

FIG. 18 is a flowchart illustrating a threshold value setting process of the setting unit 15 of the data acquiring apparatus 1 in the Example 2. In the Example 2, the setting unit 15 sets the threshold value per the type of the detection data, i.e., attribute. To be specific, the setting unit 15 accepts the information for specifying the monitoring target data such as the attribute name or the attribute ID of the setting target in accordance with the user's operation from on the operation unit 107, etc. (S201). Next, the setting unit 15 receives the threshold value of the variation quantity of the value (S202A). Through the processes described above, the threshold value per the type of the detection data, i.e., attribute, is set.

FIG. 19 is a flowchart illustrating a transmission data generating process in the Example 2. In the Example 2, the extraction unit 16 at first reads the next detection data (detection time, attribute, value) in the same way as in the Example 1 (S21). Then, the extraction unit 16 refers to the threshold value of the value that is set in association with the attribute ID of this detection data from within, e.g., the table on the main storage device (S22A). Subsequently, the extraction unit 16 calculates a value variation quantity between the value of the last time and the value of this time (S25), and determines whether the value variation quantity is equal to or larger than the threshold value (S26). When the value variation quantity is equal to or larger than the threshold value, the extraction unit 16 outputs the data to, e.g., a buffer on the main storage device and retains the data thereon (S29A). Then, the extraction unit 16, when the unprocessed data exist in the detection data table (NO in S2A), loops back the control to S21.

As described above, the information system in the Example 2 sets the threshold value per type of the detection data, i.e., per attribute, and determines whether there is the variation in the detection data. Then, when there is the variation in the detection data, the detection data is extracted and transmitted to the management apparatus 2 or the analyzing apparatus 3. The processes of the analyzing apparatus 3 and the management apparatus 2 are the same as those in the Example 1. Therefore, according to the information system in the Example 2, the data acquiring apparatus 1 simply compresses the detection data, and the management apparatus 2 or the analyzing apparatus 3 can convert the data transmitted when there is the variation into the time-series data.

### [Example 3]

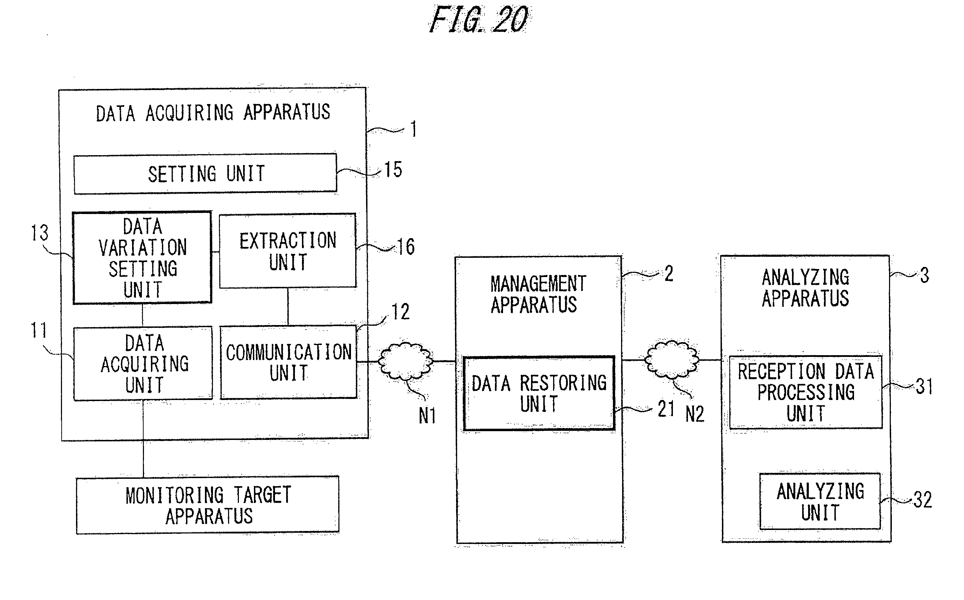

The information system in a third working Example 3will be described with reference to FIGS. 20 through 22. In the Examples 1 and 2, the extraction unit 16 of the data acquiring apparatus 1 extracts the detection data acquired from the monitoring target apparatus according to the predetermined condition, and the communication unit 12 transmits the extracted data to the management apparatus 2 and the analyzing apparatus 3. Then, the reception data processing unit 31 of the analyzing apparatus 3 executes filling the data in the reception data given from the data acquiring apparatus 1, the filter process, the equal time interval process, etc. and generates the data to be handed over to the analyzing unit 32.

In the Example 3, before the process by the extraction unit 16, a dummy variation is attached to the detection data by processing the detection data and is then deleted in the management apparatus 2 or the analyzing apparatus 3. The information system in the Example 3 attaches a so-called dummy variation such as this to the detection data, thereby controlling a transmission frequency of the data to be transmitted to the management apparatus 2 or the analyzing apparatus 3 from the data acquiring apparatus 1 while the process of the extraction unit 16 and the process of the reception data processing unit 31 remain the same as those in the Example 1. The configuration of the information system other than attaching the dummy variation such as this to the detection data by the data acquiring apparatus 1 and deleting the dummy variation by the management apparatus 2, is the same as those in the Examples 1, 2, etc. Such being the case, the same components as those in the Example or the Example 2 are marked with the same numerals and symbols as those in the Example 1 or the Example 2, and hence their explanations are omitted.

FIG. 20 is a diagram illustrating a configuration of the information system in the Example. As in FIG. 20, in the Example 3, the data acquiring apparatus 1 includes a data variation setting unit 13. Further, the management apparatus 2 includes a data restoring unit 21. Processes of the data variation setting unit 13 and the data restoring unit 21 are each executed by the CPU 101 according to the computer program deployed in the executable manner on the main storage device 102 of the computer depicted in FIG. 2. However, at least a part of the data variation setting unit 13 and the data restoring unit 21 may also be a hardware circuit.

The data variation setting unit 13 of the data acquiring apparatus 1 attaches the dummy variation to the detection data so that, e.g., the detection time interval of the data to be transmitted to the management apparatus 2 from the data acquiring apparatus 1 satisfies a predetermined allowable value. The dummy variation is attached in a way that sets "1" in a most significant bit (MSB) exclusive of a specified bit, e.g., a sign bit of the value in the detection data (detection time, attribute ID, value). Accordingly, in the information system of the Example 3, an available bit width of the value to be transmitted to the management apparatus 2 from the data acquiring apparatus 1 is less by 1 bit than in the Examples 1, 2. The data attached with the dummy variation is transmitted to the management apparatus 2 via the extraction unit 16 and the communication unit 12. The data variation setting unit 13 is one example of an extraction unit.

The data restoring unit 21 of the management apparatus 2 restores the detection data from the reception data by clearing the MSB exclusive of the specified bit, e.g., the sign bit of the value of the reception data (detection time, attribute ID, value). The data restoring unit 21 is one example of a receiving unit.

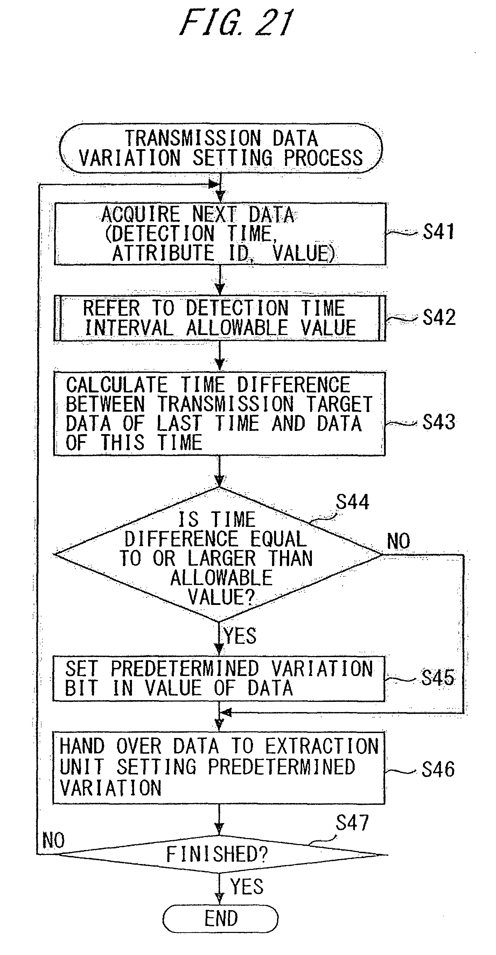

FIG. 21 is a flowchart illustrating a transmission data variation setting process by the data variation setting unit 13. In the process of FIG. 21, the data variation setting unit 13 acquires the next detection data (detection time, attribute ID, value) (S41). Then, the data variation setting unit 13 executes an allowable value reference process of the detection time interval (S42). The process in S42 is the same as in FIG. 13 of the Example 1.

Then, the data variation setting unit 13 calculates a time difference between the detection time of the detection data transmitted to the management apparatus 2 last time and the detection data transmitted this time (S43). Then, the data variation setting unit 13 determines whether the time difference is equal to or larger than the allowable value (S44). When the time difference is equal to or larger than the allowable value, the data variation setting unit 13 sets a variation bit (bit 1) in the MSB exclusive of the sign bit of the detection data of this time (S45). Then, the data variation setting unit 13 hands over the detection data with the variation bit being set to the extraction unit 16 (S46). Subsequently, the data variation setting unit 13 determines whether the processing is finished (S47). For example, when the unprocessed detection data remain, the data variation setting unit 13 loops back the control to S41. Whereas when all of the detection data are processed, the data variation setting unit 13 terminates the processing.

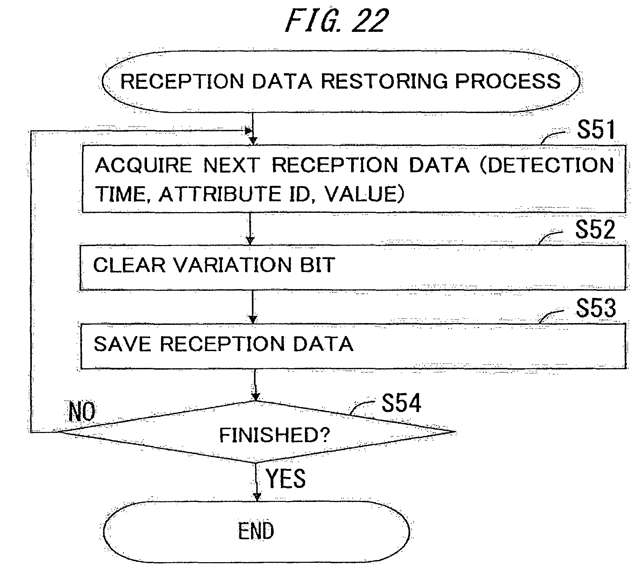

FIG. 22 is a flowchart illustrating a reception data restoring process by the data restoring unit 21. In this process, the data restoring unit 21 acquires the next reception data (detection time, attribute name, value) (S51). Then, the data restoring unit 21 clears the variation bit (the MSB exclusive of the sign bit) of the value (S52). Subsequently, the data restoring unit 21 saves the reception data (S53). Then, the data restoring unit 21 determines whether all of the reception data are processed (S54). When the unprocessed reception data exist, the data restoring unit 21 loops back the control to S51. Whereas when all of the reception data are processed, the data restoring unit 21 terminates the reception data restoring process.

As discussed above, according to the information system of the Example 3, the detection time interval of the transmission data can be controlled by attaching the variation bit to the detection data. In the case of the Example 3, the extraction unit 16 of the data acquiring apparatus 1 and the reception data processing unit 31 of the analyzing apparatus 3, which are the same as those in the Example 1, are available as they are.

### <Effects of Embodiment>

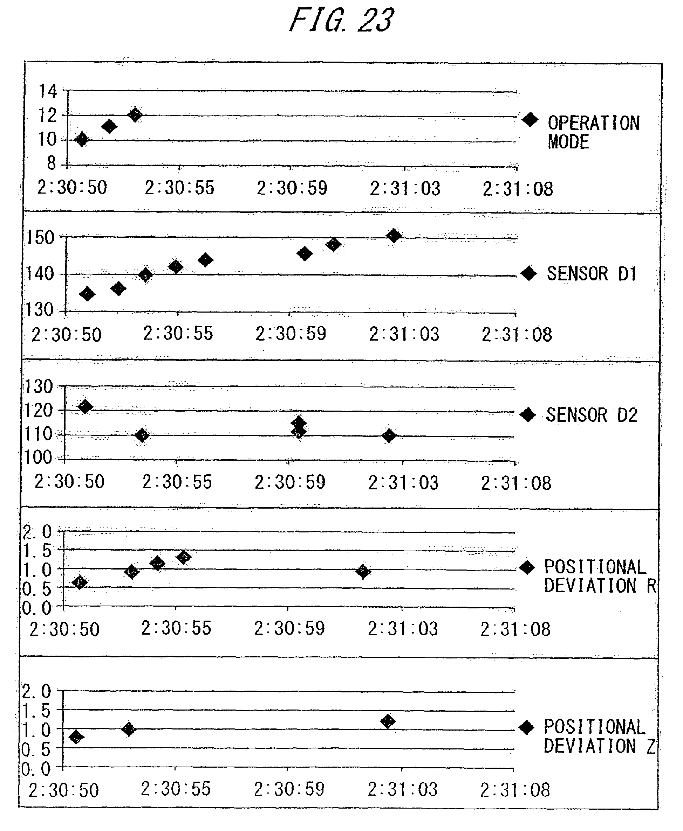

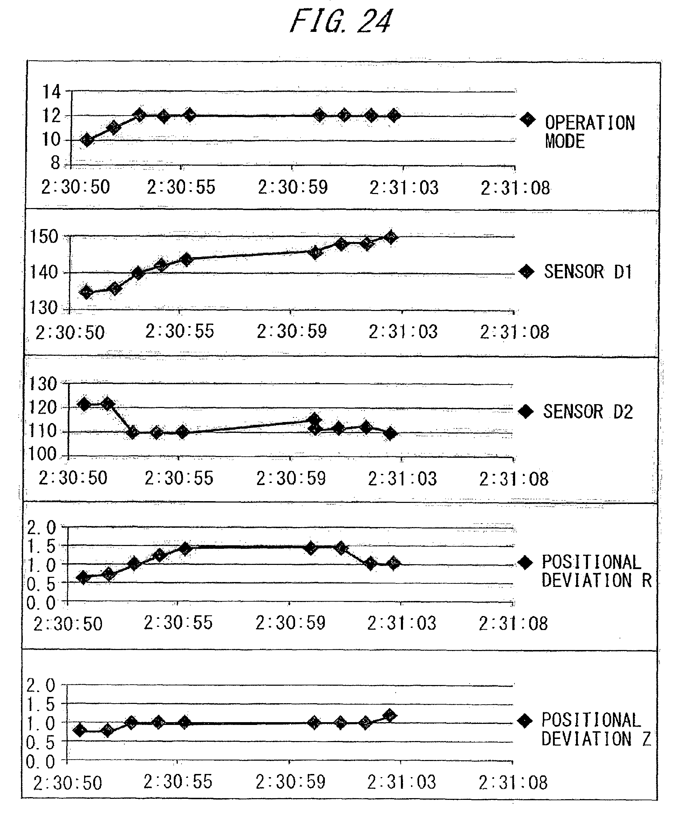

Effects of the embodiment including the Example 1 through the Example 3 will be described with reference to FIGS. 23 and 24. FIG. 23 depicts a graph configured to visualize the reception data in FIG. 4A that is illustrated in the Example 1. The graph in FIG. 23 is a scatter diagram illustrating values given in the fields such as "operation mode", "sensor D1", "sensor D2", "positional deviation R" and "positional deviation Z" depicted in FIG. 4A, in which the axis of abscissa indicates the time, and the axis of ordinates indicates the value (value of operation mode, detection data). As described in the Example 1, the extraction unit 16 of the data acquiring apparatus 1, when determining that there is not variation in detection data, omits the transmission of the detection data, and consequently the blank columns increase in the reception data table as in FIG. 4A. Accordingly, when creating the scatter diagram from the reception data table in FIG. 4A, the graph becomes discontinuous, and a discontinuous portion having an irregular length occurs between plotted pieces of data.

By contrast, FIG. 24 illustrates a graph in which the reception data in FIG. 4C are visualized. As explained in the Example 1, the process of filling the blank columns with the most updated known values, is carried out in FIG. 4C. Hence, when visualizing the data in FIG. 4C, for instance, the items of data are completely given in time-series in every field such as "operation mode", "sensor D1", "sensor D2", "positional deviation R" and "positional deviation Z" depicted in FIG. 4C. Therefore, continuous plotted lines formed by connecting the pieces of data in time-series can be drawn with high accuracy in the respective fields as in FIG. 24.

A behavior of the sensor signal is clarified owing to such a graph. Hence, e.g., when abnormality occurs in the monitoring target apparatus, a cause thereof can be analyzed by observing the behaviors of the respective sensor signals.

For example, a correlation between the plural sensors is obtained, the sensor signal related to the abnormality of the apparatus can be specified based on, e.g., the data of the sensors ruled out of the correlation. Further, the behaviors of the sensor signals are recognized as patterns, or alternatively a pattern at a normal time is compared with a pattern at an abnormal time, thereby enabling the sensor related to the abnormality of the apparatus to be specified or enabling a sign of the abnormality of the apparatus to be detected.

### <Modification of Embodiment>

The data (the detection data table in FIG. 3, the reception data tables in FIGS. 4A - 4C, etc.) described in the embodiment discussed above may be stored batchwise as files (data sets). For example, the data of the monitoring target apparatus may be segmented on a period basis such as per day and per hour and stored as one file. Such an aggregation of the data is organized as the file, thereby facilitating the visualization of the data or the analysis of the data. Further, e.g., in a semiconductor manufacturing apparatus used in a semiconductor manufacturing process, one file may be generated per wafer. Moreover, the file may be generated per lot (one lot containing, e.g., 25 wafers). Alternatively, in a chemical plant, the file may be generated per batch process. Moreover, in order to visualize and analyze a variation in long-term trend such as covering several months, the files generated in the procedures described above may be combined and aggregated corresponding to a condition such as the period. For executing such a file combining/aggregating process at a high speed, e.g., all of the generated files may be read onto the memory and may be processed on the memory.

### <Computer-Readable Recording Medium>

A program for making a computer enables any one of the functions can be recorded on a recording medium readable by the computer. Then, the computer, etc. is made to read the program on this recording medium, and deploy the program in the main storage device in an executable manner, whereby the processing may be implemented.

Herein, the recording medium readable by the computer, etc. connotes a recording medium capable of accumulating information such as data and programs electrically, magnetically, optically, mechanically or by chemical action, which can be read by the computer, etc. Herein, a semiconductor memory device may be illustrated as the recording medium with an electric action. Further, a hard disk may be illustrated as the recording medium with a magnetic action. Still further, a CD (compact disc) may be illustrated as the recording medium with an optical action. Yet further, a punch tape, a punch card, etc. may be illustrated as the recording medium with an mechanical action.

Among these recording mediums, for example, a flexible disc, a magneto-optic disc, a CD-ROM (Read only Memory), a CD-R/W, a DVD(Digital Versatile Disk), a DAT(Digital Audio Tape), an 8 mm tape, a memory card, etc. are given as those removable from the computer. Further, a hard disc, SSD, RAM of the main storage device, a ROM, etc. are given as the recording mediums fixed within the computer, etc.

## Claims

1. An information system comprising:
a transmission-side information processing apparatus; and
a reception-side information processing apparatus,
the transmission-side information processing apparatus including:
an acquiring unit for acquiring in time series, a set of data of a plurality of attributes from a monitoring target;
an extraction unit for extracting, when the extraction unit determines according to a determination mode that the acquired set of data includes a change, the changed data from the set of data, the extraction unit changing the determination mode in accordance with a status of the monitoring target; and
a transmitting unit for transmitting the extracted data to the reception side information processing apparatus,
the reception-side information processing apparatus including:
a receiving unit for receiving from the transmission-side information processing apparatus the data extracted from the set of data of the plurality of attributes acquired in time series from the monitoring target; and
a reception data processing unit for setting, when a set of the received data includes a value-unfilled attribute, a value being latest among known values of the attribute included in previously received time-series sets of data, as a value of the value-unfilled attribute.

2. An information processing apparatus comprising:
a receiving unit for receiving from a transmission-side information processing apparatus data extracted from a set of data of a plurality of attributes acquired in time series from a monitoring target; and
a reception data processing unit for setting, when a set of the received data includes a value-unfilled attribute, a value being latest among known values of the attribute included in previously received time-series sets of data, as a value of the value-unfilled attribute.

3. The information processing apparatus according to claim 2, wherein the reception data processing unit, when redundant items of data exist at the same point of time in the time-series sets of data, uses the data being posterior in arrival sequence of the time-series sets of data as latest known value.

4. The information processing apparatus according to claim 2 or 3, wherein the reception data processing unit organizes, when detecting a portion of an unequal time interval between two sets of data being located anterior and posterior within the time-series sets of data, the time-series sets of data at an equal time interval by copying the set of data of the anterior time in the two sets of data being located at the unequal time interval to between the two sets of data.

5. An information processing apparatus comprising:
an acquiring unit for acquiring in time series, a set of data of a plurality of attributes from a monitoring target;
an extraction unit for extracting, when the extraction unit determines according to a determination mode that the acquired set of data includes a change, the changed data from the set of data, the extraction unit changing the determination mode in accordance with a status of the monitoring target; and
a transmitting unit for transmitting the extracted data to a reception side information processing apparatus.

6. The information processing apparatus according to claim 5, wherein the extraction unit determines, when the monitoring target is in a first status, that the acquired set of data includes the change by using, as a threshold value for determining that the acquired set of data includes the change, a threshold value different from the threshold value used when the monitoring target is in a second status other than the first status.

7. The information processing apparatus according to claim 5 or 6, wherein the extraction unit determines, when first data among the set of data acquired from the monitoring target satisfy a predetermined condition, that the acquired set of data includes the change by using, as a threshold value for determining that the acquired set of data includes the change, a threshold value different from a threshold value given when the first data do not satisfy the predetermined condition.

8. The information processing apparatus according to any one of claims 5 through 7, wherein the extraction unit extracts, when the monitoring target is in a third status, the data at a time interval different from a time interval used when the monitoring target is in a fourth status other than the third status.

9. The information processing apparatus according to any one of claims 5 through 8, wherein the extraction unit extracts, when third data among the set of data acquired in time series from the monitoring target satisfies a predetermined condition, fourth data among the set of data acquired in time series from the monitoring target at a time interval different from a time interval used when the third data does not satisfy the predetermined condition.

10. The information processing apparatus according to any one of claims 5 through 9, wherein the extraction unit extracts a part or the whole of the acquired set of data irrespective of whether or not the acquired set of data includes the change when the monitoring target is in a predetermined status.

11. An information processing method, comprising:
an acquiring step of acquiring in time series, a set of data of a plurality of attributes from a monitoring target;
an extracting step of extracting, when the extraction unit determines according to a determination mode that the acquired set of data includes a change, the changed data from the set of data, the extraction unit changing the determination mode in accordance with a status of the monitoring target;
a transmitting step of transmitting the extracted data to a reception side information processing apparatus;
a receiving step of receiving from a transmission-side information processing apparatus the data extracted from the set of data of the plurality of attributes acquired in time series from the monitoring target; and
a reception data processing step of setting, when a set of the received data includes a value-unfilled attribute, a value being latest among known values of the attribute included in previously received time-series sets of data, as a value of the value-unfilled attribute.

12. An information processing method, comprising:
a receiving step of receiving from a transmission-side information processing apparatus data extracted from set of data of a plurality of attributes acquired in time series from a monitoring target; and
a reception data processing step of setting, when a set of the received data includes a value-unfilled attribute, a value being latest among known values of the attribute included in previously received time-series sets of data, as a value of the value-unfilled attribute.

13. An information processing method, comprising:
an acquiring step of acquiring in time series, a set of data of a plurality of attributes from a monitoring target;
an extracting step of extracting, when the extraction unit determines according to a determination mode that the acquired set of data includes a change, the changed data from the set of data, the extraction unit changing the determination mode in accordance with a status of the monitoring target; and
a transmitting step of transmitting the extracted data to a reception side information processing apparatus.

14. A program to perform a computer to execute:
a receiving step of receiving from a transmission-side information processing apparatus data extracted from a set of data of a plurality of attributes acquired in time series from a monitoring target; and
a reception data processing step of setting, when a set of the received data includes a value-unfilled attribute, a value being latest among known values of the attribute included in previously received time-series sets of data, as a value of the value-unfilled attribute.

15. A program to perform a computer to execute:
an acquiring step of acquiring in time series, a set of data of a plurality of attributes from a monitoring target;
an extracting step of extracting, when the extraction unit determines according to a determination mode that the acquired set of data includes a change, the changed data from the set of data, the extraction unit changing the determination mode in accordance with a status of the monitoring target; and
a transmitting step of transmitting the extracted data to a reception side information processing apparatus.
